# EUROPEAN PATENT APPLICATION

(11) **EP 4 826 900 A1**
(43) Date of publication of application: **21.10.2026**
(21) Application number: 24918006.8
(22) Date of filing: 01.08.2024
(51) Int. Cl.: H01M 50/593

(54) **BATTERY CELL, BATTERY, AND ELECTRICAL APPARATUS**

(30) Priority: 17.01.2024 CN 202420118210 U
(71) Applicant: Contemporary Amperex Technology Co., Limited, Ningde, Fujian 352100 (CN)
(72) Inventor: CHEN, Wenwei, Ningde, Fujian 352100 (CN); LIN, Denghua, Ningde, Fujian 352100 (CN); LI, Quankun, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2024/109300
(87) International publication number: WO 2025/152394

(57) **Abstract**

A battery cell (10), a battery (100), and an electrical apparatus (1000). The battery cell (10) comprises: a housing (11), comprising a housing cover (112) and a housing body (111), wherein the housing (11) is provided with electrode columns (12); an electrode assembly (2), comprising a conductive portion (22) and an active substance coating portion (21), wherein the conductive portion (22) is electrically connected to the active substance coating portion (21) and the electrode columns (12); a support (3), arranged within the housing body (111) and located at the end of the active substance coating portion (21) away from the housing cover (112); and an insulating piece (4), comprising a main body insulating portion (41), a first insulating portion (42) and a second insulating portion (43), wherein the main body insulating portion (41) is arranged on the peripheral side of the active substance coating portion (21), the first insulating portion (42) is arranged between the support (3) and the end of the active substance coating portion (21) away from the housing cover (112), and the second insulating portion (43) is arranged at the end of the active substance coating portion (21) close to the housing cover (112). The risk of failure and damage of the electrode assembly (2) is reduced, the risk of corrosion of the housing (11) is reduced, and the reliability and stability of the battery cell (10) are improved.

## Description

### CROSS-REFERENCE TO RELATED APPLICATIONS

The present application claims priority to Chinese Patent Application No. 202420118210.X filed on January 17, 2024, which is incorporated herein by reference in its entirety.

### TECHNICAL FIELD

The present application relates to the field of batteries, and specifically to a battery cell, a battery, and a power consuming apparatus.

### BACKGROUND

Energy saving and emission reduction are the key to the sustainable development of the automobile industry. Electric vehicles have become an important part of the sustainable development of automotive industry due to their advantages of energy saving and environmental protection. For the electric vehicles, the battery technology is an important factor for their development. In the related art, reliability of a battery cell is to be improved, which hinders further improvement of reliability of a battery.

### SUMMARY

In view of the foregoing problem, the present application provides a battery cell, a battery, and a power consuming apparatus that have relatively high reliability.

According to a first aspect, the present application provides a battery cell, including: a housing, including a housing cover and a housing body having an opening, where the housing cover covers the opening, and a terminal is arranged on the housing; an electrode assembly, including a conductive portion and an active material coating portion arranged in the housing, where the conductive portion is electrically connected to the active material coating portion and the terminal; a bracket, arranged at an end of the active material coating portion away from the housing cover in the housing body; and an insulating member, including a main insulating portion, a first insulating portion, and a second insulating portion, where the main insulating portion is arranged on a circumferential side of the active material coating portion, the first insulating portion is arranged between the bracket and the end of the active material coating portion away from the housing cover, and the second insulating portion is arranged at an end of the active material coating portion close to the housing cover.

In the technical solution of this embodiment of the present application, the insulating member is set to include the main insulating portion, the first insulating portion, and the second insulating portion, so that the insulating member can completely wrap the electrode assembly. In a process of mounting the electrode assembly wrapped with the insulating member into the housing, a probability that the insulating member is detached from the electrode assembly can be reduced. After the electrode assembly is mounted into the housing, the first insulating portion of the insulating member is located between the bracket and the active material coating portion, that is, the active material coating portion is further isolated from the housing by using the bracket, so that exposure of the active material coating portion can be fully reduced, to further reduce a risk of failure and damage of the electrode assembly, reduce a risk of corrosion of the housing, and improve reliability and stability of the battery cell.

In some embodiments, a plurality of liquid passage holes that are provided at intervals are provided at a position of the main insulating portion close to the second insulating portion. The plurality of liquid passage holes can increase fluidity of an electrolyte solution, increase a contact area between the electrolyte solution and the active material coating portion, and alleviate a problem of poor infiltration of the active material coating portion.

In some embodiments, the plurality of liquid passage holes are provided at intervals in a length direction of the main insulating portion, so that an infiltration effect of the insulating member can be improved.

In some embodiments, a distance between the liquid passage hole and the second insulating portion ranges from 1 mm to 8 mm, so that the infiltration effect of the insulating member can be improved.

In some embodiments, the distance between the liquid passage hole and the second insulating portion ranges from 3 mm to 5 mm, so that the effect of infiltrating the insulating member is further improved.

In some embodiments, a diameter of the liquid passage hole ranges from 0.5 mm to 1 mm. The diameter of the liquid passage hole is excessively large, causing easily breakage of the insulating member. The diameter of the liquid passage hole is excessively small, affecting infiltration efficiency of an electrolyte solution. In this embodiment, the diameter of the liquid passage hole is defined to meet the foregoing condition, so that use reliability of the insulating member can be improved, and efficiency of infiltrating the insulating member into the electrolyte solution can also be improved.

In some embodiments, the main insulating portion includes a plurality of main body portions; and the plurality of main body portions are sequentially connected end to end to form a ring shape, the plurality of main body portions jointly wrap around the circumferential side of the active material coating portion and any two adjacent main body portions are connected, and the liquid passage holes are provided on the main body portions and a quantity of liquid passage holes on each main body portion is greater than or equal to 3, so that the efficiency of infiltrating the insulating member into the electrolyte solution can be improved.

In some embodiments, an explosion-proof valve is arranged on the housing, and the insulating member has an air vent corresponding to a position of the explosion-proof valve. The air vent is provided on the insulating member, and the explosion-proof valve can be in communication with the air vent, so that the explosion-proof valve can normally perform exhaustion and pressure relief.

In some embodiments, the explosion-proof valve is located on a wall of the housing body opposite to the bracket, the air vent is provided on the first insulating portion, and the bracket has an exhaust hole corresponding to the position of the explosion-proof valve. In the technical solution, in the process of mounting the electrode assembly wrapped with the insulating member into the housing body, the first insulating portion may move in a housing entering direction to gradually approach the bracket until the air vent corresponds to the explosion-proof valve, to reduce a probability that the explosion-proof valve damages the first insulating portion in a housing entering process, fully reduce exposure of the active material coating portion, and reduce the risk of corrosion of the housing, so as to further improve reliability and stability of the electrode assembly and the battery cell.

In some embodiments, there is one air vent; or there are a plurality of air vents, and the plurality of air vents are provided at intervals in a length direction of the first insulating portion, so that exhaustion efficiency can be improved.

In some embodiments, there is one exhaust hole; or there are a plurality of exhaust holes, and the plurality of exhaust holes are provided at intervals in a length direction and/or a width direction of the bracket, so that exhaustion efficiency can be improved.

In some embodiments, the bracket includes a bracket body, where the bracket body has a first side and a second side that are arranged opposite to each other in a thickness direction of the bracket body, and the exhaust hole extends through the first side and the second side; and a first abutting portion, arranged on the first side and protruding in a direction away from the second side, and configured to abut against the end of the active material coating portion away from the housing cover, so that the exhaust hole and the active material coating portion jointly form a first exhaust channel. In the technical solution, the first abutting portion is arranged on the first side of the bracket body, and the first abutting portion abuts against the end of the active material coating portion away from the housing cover. This can increase a distance between the first side of the bracket body and the active material coating portion, that is, increase a distance between the exhaust hole and the active material coating portion, so that the first exhaust channel in communication with the exhaust hole is defined between the first side of the bracket body and the active material coating portion, to improve an exhaustion capability. When thermal runaway tends to occur in the battery cell, generated gas may first enter the first exhaust channel, then pass through the bracket through the exhaust hole, and finally may be discharged from the explosion-proof valve, to achieve rapid pressure relief, so that a risk that the battery cell burns and explodes can be reduced, and impact on an adjacent battery cell can be reduced, thereby helping improve use reliability and stability of a battery.

In some embodiments, a gas passage gap that extends through the first side and the second side is provided in a circumferential direction of the bracket, the gas passage gap and the housing jointly form a gas passage channel, and the gas passage channel is in communication with the first exhaust channel. In the technical solution, the gas passage gap is provided on the bracket, and the gas passage channel may be defined by the gas passage gap and the housing, so that gas generated in a circumferential direction of the electrode assembly can move to a position of the explosion-proof valve through the gas passage channel at a corresponding position in a short time, to improve timeliness of pressure relief of the explosion-proof valve. In addition, the gas in the first exhaust channel may flow to the exhaust hole and the gas passage channel respectively in a short time, to implement instantaneous pressure relief, and finally may be discharged from the explosion-proof valve, to implement final pressure relief, so as to further reduce the risk that the battery cell burns and explodes and improve the use reliability and stability of the battery. Moreover, during injection, an electrolyte solution may flow to the electrode assembly through the gas passage gap, to shorten infiltration time and improve infiltration efficiency.

In some embodiments, a plurality of gas passage gaps that are provided at intervals are provided in the circumferential direction of the bracket, each gas passage gap and the housing jointly form one gas passage channel, and a plurality of gas passage channels are provided around a circumferential direction of the first exhaust channel. The plurality of gas passage gaps are provided, the plurality of gas passage channels may be defined, and a part of the gas in the first exhaust channel spreads in all directions, may pass through the bracket through the plurality of gas passage channels, and finally may be discharged from the explosion-proof valve. This greatly reduces the risk that the battery cell burns and explodes and greatly improve the use reliability and stability of the battery. During injection, the electrolyte solution may flow to the electrode assembly through the plurality of gas passage gaps, to further shorten the infiltration time and greatly improve the infiltration efficiency.

In some embodiments, a first extending portion further protrudes on the first side of the bracket body, the first extending portion is arranged around the circumferential direction of the bracket body and defines a matching slot with the bracket body, and the end of the active material coating portion away from the housing cover is arranged in the matching slot. In the technical solution, the first extending portion may be arranged, to restrict one end of the electrode assembly, so that stability of the electrode assembly during shaking of the battery cell is improved, a probability that an outer layer of the active material coating portion of the electrode assembly is in a fluffy state is reduced, and one end of the electrode assembly is further protected, to alleviate a problem that one end of the electrode assembly touches the housing. Therefore, occurrence of a phenomenon that the electrode assembly is scratched by the housing is reduced, and use reliability of the battery cell is improved.

In some embodiments, the gas passage gap extends through the first extending portion and the bracket body. The formed gas passage channel passes through two sides of the bracket in a thickness direction and is in communication with the first exhaust channel and the explosion-proof valve. The gas in the first exhaust channel may flow to the exhaust hole and the gas passage channel respectively in a short time, to implement instantaneous pressure relief, and finally may be discharged from the explosion-proof valve, to implement final pressure relief, so as to further reduce the risk that battery cell burns and explodes and improve the use reliability and stability of the battery.

In some embodiments, the first extending portion and the first abutting portion are spaced away, and jointly form a first flow guide channel, and the first flow guide channel is in communication with at least one gas passage channel and the first exhaust channel. In the technical solution, the gas entering the first exhaust channel may flow to two sides of the exhaust hole in a length direction of the battery cell under the guidance of two first flow guide channels, to implement instantaneous pressure relief, then pass through the bracket through the plurality of gas passage channels, and finally may be discharged from the explosion-proof valve, to implement final pressure relief, so as to further reduce the risk that the battery cell burns and explodes and improve the use reliability and stability of the battery. During injection, the electrolyte solution may flow under the guidance of the two first flow guide channels, to shorten the infiltration time and improve the infiltration efficiency.

In some embodiments, a second abutting portion protruding in a direction away from the first side is arranged on the second side of the bracket body, the second abutting portion is configured to abut against the wall of the housing on which the explosion-proof valve is arranged, and the second abutting portion and the wall jointly form a second exhaust channel. The second exhaust channel is in communication with at least one gas passage channel. In the technical solution, the second abutting portion is arranged on the second side of the bracket body, and the second abutting portion abuts against the wall of the housing on which the explosion-proof valve is arranged, so that the second exhaust channel in communication with the gas passage channel is defined between the second side of the bracket body and the wall of the housing, to increase a space occupied by an exhaust path, improve the exhaustion capability, reduce the risk that the battery cell burns and explodes, reduce the impact on the adjacent battery cell, and help improve the use reliability and stability of the battery.

In some embodiments, a second extending portion further protrudes on the second side of the bracket body, the second extending portion and the second abutting portion are spaced away, and jointly form a second flow guide channel, and the second flow guide channel is in communication with at least one gas passage channel and the second exhaust channel. The second flow guide channel may increase the space occupied by the exhaust path, to help improve the exhaustion capability, and may also play a guiding function, so that the part of gas passing through the bracket through the gas passage channel may flow to the second exhaust channel along the second flow guide channel and finally may be discharged from the explosion-proof valve, to implement pressure relief, so as to further reduce the risk that the battery cell burns and explodes and improve the use reliability and stability of the battery. In addition, the second flow guide channel may guide flow of the electrolyte solution, to further shorten the infiltration time and greatly improve the infiltration efficiency.

In some embodiments, in a length direction of the battery cell, there are a plurality of gas passage gaps on both sides of the exhaust hole, and a plurality of gas passage gaps located on a same side of the exhaust hole share one second flow guide channel. In the technical solution, the gas passing through the bracket may flow to the second exhaust channel located in the middle under the guidance of the second flow guide channel, and finally may be discharged from the explosion-proof valve, to implement final pressure relief, so as to further reduce the risk that the battery cell burns and explodes and improve the use reliability and stability of the battery. The electrolyte solution may flow to the plurality of gas passage gaps under the guidance of the second flow guide channel, to shorten the infiltration time and improve the infiltration efficiency.

In some embodiments, the terminal includes a first terminal, the first terminal is arranged on a wall of the housing body opposite to the housing cover, an avoidance hole is provided on the first insulating portion, and the avoidance hole is for the conductive portion to pass through, so that the conductive portion is capable of being connected to the first terminal. In the technical solution, the avoidance hole is provided on the first insulating portion, so that the first insulating portion can avoid the conductive portion. This can reduce damage of the first insulating portion to the conductive portion, and also facilitate an electrical connection between the conductive portion and the first terminal on the housing. In addition, when the electrolyte solution is injected into the housing, the electrolyte solution may enter the electrode assembly through the avoidance hole, to accelerate an infiltration speed of the electrolyte solution.

In some embodiments, the terminal includes two first terminals having opposite polarities, and two avoidance holes are provided on the first insulating portion. The two first terminals may be separately electrically connected to the conductive portion at the two avoidance holes on the first insulating portion, which makes the connection more convenient and helps improve assembly efficiency of the battery cell.

In some embodiments, the main insulating portion includes a plurality of main body portions; and the plurality of main body portions are sequentially connected end to end to form a ring shape, the plurality of main body portions jointly wrap around the circumferential side of the active material coating portion and any two adjacent main body portions are connected, and the first insulating portion and the second insulating portion are respectively located on two axial ends of a ring structure formed by the plurality of main body portions. After being connected, the plurality of main body portions are in a ring shape, and may completely wrap the circumferential side of the active material coating portion, so that the circumferential side of the active material coating portion is completely isolated from an inner wall of the housing. The first insulating portion and the second insulating portion wrap two axial ends of the active material coating portion, so that the two axial ends of the active material coating portion are completely isolated from two axial ends of the housing, to reduce a risk of exposure of the active material coating portion, and improve reliability and stability of the battery cell.

In some embodiments, connection positions of any two adjacent main body portions partially overlap. In the technical solution, connection positions of the main body portions overlap, facilitating connection of two adjacent main body portions, for example, facilitating connection of two adjacent main body portions through a first tape, so that the connection positions are not easily separated or disconnected, to reduce a probability and a risk of an insulation failure at an overlapping position, and improve reliability of the electrode assembly, so as to improve stability and reliability of the battery cell. In addition, the connection positions of the main body portions overlap, to fully ensure that the entire insulating member can wrap around the circumferential direction of the active material coating portion, fully reduce exposure of the active material coating portion, and reduce a risk of corrosion of the housing, so as to further improve reliability and stability of the electrode assembly and the battery cell.

In some embodiments, the circumferential side of the active material coating portion has a plurality of surfaces. Each main body portion includes a main body surface and two flanges arranged on two sides of the main body surface, any two adjacent main body portions are connected through the flanges, and a connection structure of each main body surface and every two flanges respectively warps different surfaces on the circumferential side of the active material coating portion. In the technical solution, a connection between any two adjacent main body portions through flanges can ensure reliability of the connection, to improve reliability and stability of the electrode assembly and the battery cell. In addition, the main body surface and a connection position of every two flanges respectively wrap different surfaces on the circumferential side of the active material coating portion, so that each surface on the circumferential side of the active material coating portion can be effectively wrapped, thereby further improving reliability of the electrode assembly and improving stability and reliability of the battery cell.

In some embodiments, the circumferential side of the active material coating portion has four surfaces; the main insulating portion includes two main body portions arranged on two sides of the first insulating portion, the two main body portions are respectively a first main body portion and a second main body portion, the first main body portion includes a first main body surface, and a first flange and a second flange that are arranged on two sides of the first main body surface, the second main body portion includes a second main body surface, and a third flange and a fourth flange that are arranged on two sides of the second main body surface, the first flange is connected to the third flange, and the second flange is connected to the fourth flange; and a connection structure of the first main body surface, the first flange, and the third flange and a connection structure of the second main body surface, the second flange, and the fourth flange respectively wrap the four surfaces sequentially arranged on the circumferential side of the active material coating portion. In this embodiment of the present application, the circumferential side of the active material coating portion has four surfaces, which are respectively two opposite large surfaces and two opposite small surfaces. The first main body surface and the second main body surface respectively wrap the two opposite large surfaces on the circumferential side of the active material coating portion. The first flange and the third flange are connected and wrap one small surface on the circumferential side of the active material coating portion. The second flange and the fourth flange are connected and wrap the other small surface on the circumferential side of the active material coating portion. The first insulating portion wraps an end portion of the active material coating portion away from the opening. The second insulating portion wraps an end portion of the active material coating portion close to the opening.

In some embodiments, the second insulating portion includes a plurality of insulating parts, the plurality of insulating parts are connected to the main body surfaces of the plurality of main body portions in one-to-one correspondence, and any two adjacent insulating parts are connected. In the process of mounting the electrode assembly into the housing, the first insulating portion first enters the housing, and the second insulating portion finally enters the housing. In this process, the insulating member may enter the housing in a housing entering direction, and the housing does not scratch an edge of the insulating member, to reduce movement and slippage of the insulating member.

In some embodiments, any two adjacent insulating parts partially overlap, making it difficult for the two adjacent insulating parts to separate. This reduces a probability and risk of an insulation failure at the overlapping position, fully reduces exposure of the active material coating portion, reduces a risk of corrosion of the housing, and improves reliability of the electrode assembly, thereby improving stability and reliability of the battery cell.

In some embodiments, a through hole exposing the first terminal is provided on the bracket, the through hole is opposite to the avoidance hole, an accommodation portion in communication with the through hole is provided on the terminal, and at least a part of the conductive portion passes through the avoidance hole and the through hole and then extends into the accommodation portion and is connected to the terminal. Because the accommodating portion is arranged on the terminal, a hollow structure of the accommodating portion can reduce a weight of the terminal to a certain extent, to improve gravimetric energy density of the battery cell and the battery. In addition, the conductive portion can be accommodated in the accommodating portion, to improve assembly efficiency of the conductive portion, further reduce a space occupied by the conductive portion, and fully use a space of the battery cell, so that both matching between the bracket and the terminal and matching between the bracket and the conductive portion are tighter and more reliable, and a structure of the battery cell is more compact, thereby helping improve energy density of the battery cell.

In some embodiments, the battery cell further includes a protection member, arranged at least one side of a circumferential side of the first insulating portion and superimposed on an outer side of the main insulating portion. In the technical solution, the protection member is arranged on at least one side of the circumferential side of the first insulating portion. The protection member can play a guide role in the process of mounting the electrode assembly into the housing, to facilitate mounting the electrode assembly into the housing, and can also protect the insulating member, to reduce a probability that the housing scratches the insulating member, and reduce movement and slippage of the insulating member. In addition, after the electrode assembly is mounted into the housing, the protection member is located between a part of the insulating member and the housing, so that the active material coating portion can be further isolated from the housing, and the protection member may cooperate with the insulating member to implement double insulation, to fully reduce exposure of the active material coating portion, and reduce a risk of corrosion of the housing, so as to further improve reliability and stability of the electrode assembly and the battery cell.

According to a second aspect, the present application provides a battery, including the battery cell in the foregoing embodiments. In the technical solution of this embodiment of the present application, the foregoing battery cell is used, so that reliability and stability of the battery can be improved.

According to a third aspect, the present application provides a power consuming apparatus, including the battery cell in the foregoing embodiments; or including the battery in the foregoing embodiments. In the technical solution of this embodiment of the present application, the foregoing battery cell or battery is used, so that reliability and stability of the power consuming apparatus can be improved.

The foregoing description is merely an overview of the technical solutions of the present application. To understand the technical solutions of the present application more clearly, implementation can be performed according to content of the specification. Moreover, to make the foregoing and other objectives, features, and advantages of the present application more comprehensible, specific implementations of the present application are described below.

### BRIEF DESCRIPTION OF THE DRAWINGS

Various other advantages and benefits become clear to a person of ordinary skill in the art by reading the following detailed description of exemplary implementations. The accompanying drawings are merely used for illustrating the preferred implementations and are not intended to constitute a limitation on the present application. In all the accompanying drawings, the same reference numerals indicate the same parts. In the accompanying drawings:
FIG. 1 is a schematic structural diagram of a vehicle according to some embodiments of the present application;
FIG. 2 is a structural exploded view of a battery according to some embodiments of the present application;
FIG. 3 is a three-dimensional view of a battery according to some embodiments of the present application;
FIG. 4 is a structural exploded view of a battery according to some embodiments of the present application;
FIG. 5 is a schematic structural diagram of an electrode assembly of a battery, an insulating member, and a protection member according to some embodiments of the present application;
FIG. 6 is a side view of a structure shown in FIG. 5 from a perspective;
FIG. 7 is a structural cross-sectional view of a battery according to some embodiments of the present application;
FIG. 8 is an enlarged view of a portion A in FIG. 7;
FIG. 9 is an enlarged view of a portion B in FIG. 7;
FIG. 10 is a schematic structural diagram of a bracket of a battery cell from a perspective according to some embodiments of the present application;
FIG. 11 is a partial enlarged view of the bracket shown in FIG. 10;
FIG. 12 is a schematic structural diagram of a bracket of a battery cell from another perspective according to some embodiments of the present application;
FIG. 13 is a partial enlarged view of the bracket shown in FIG. 12;
FIG. 14 is a schematic structural diagram of an electrode assembly of a battery, an insulating member, and a protection member according to some embodiments of the present application; and
FIG. 15 is a top view of a structure shown in FIG. 14.

Illustrations of reference signs:
Power consuming apparatus 1000, battery 100, controller 200, motor 300,
battery cell 10, box 20, first portion 201, second portion 202,
housing 11, housing body 111, opening 1110, housing cover 112, first mounting hole 113, second mounting hole 114, first hole section 1151, second hole section 1152, third hole section 1153, fourth hole section 1154, first step surface 1161, second step surface 1162, third step surface 1163, upper plastic 117, lower plastic 118,
terminal 12, first terminal 121, via hole 12130,
electrode assembly 2, active material coating portion 21, conductive portion 22, first conductive portion 221,
bracket 3, matching slot 30, gas passage channel 301, first exhaust channel 302, second exhaust channel 303, first flow guide channel 304, second flow guide channel 305, bracket body 31, first side 311, second side 312, exhaust hole 313, through hole 314, gas passage gap 315, mounting recessed portion 316, gas passage hole 317, weight reducing groove 319, first abutting portion 321, second abutting portion 322, first extending portion 331, second extending portion 332,
insulating member 4, indentation 401, first indentation 401a, second indentation 401b, third indentation 401c, main insulating portion 41, main body portion 410, liquid passage hole 410a, first main body portion 411, first main body surface 4111, first flange 4112, second flange 4113, second main body portion 412, second main body surface 4121, third flange 4122, fourth flange 4123, first insulating portion 42, air vent 421, avoidance hole 422, second insulating portion 43, insulating part 430,
protection member 5, explosion-proof valve 6, protection plate 61, and groove cover 7.

### DETAILED DESCRIPTION

Embodiments of the technical solution of the present application are described in detail with reference to the accompanying drawings. The following embodiments are only intended to more clearly illustrate the technical solutions of the present application and are therefore intended as examples only and are not intended to limit the scope of protection of the present application.

Unless otherwise defined, all technical terms and scientific terms used herein have the same meaning as commonly understood by those skilled in the technical field of the present application. Terms used in this specification are merely intended to describe objectives of specific embodiments, but are not intended to limit the present application. The terms "including" and "having" and any variations thereof in the specification and claims of the present application as well as the above description of the drawings are intended to cover non-exclusive inclusions.

In descriptions of the embodiments of the present application, the technical terms "first," "second" and the like are used only to distinguish different objects and are not understood to indicate or imply relative importance or to imply the number, specific order or primary and secondary relationship of the indicated technical features. In the descriptions of the embodiments of the present application, unless otherwise specifically limited, "a plurality of" means two or more than two.

"Embodiment" mentioned in the specification means that particular features, structures, or characteristics described with reference to the embodiment may be included in at least one embodiment of this application. The term appearing at different positions of the specification may not refer to the same embodiment or an independent or alternative embodiment that is mutually exclusive with another embodiment. A person skilled in the art explicitly or implicitly understands that the embodiments described in the specification may be combined with other embodiments.

In the description of embodiments of the present application, the term "and/or" herein is simply a description of the association relationship of the associated objects, indicating that three relationships can exist, for example, A and/or B may indicate that A exists alone, A and B exist at the same time, and B exists alone. In addition, the character "/" in this specification generally indicates an "or" relationship between the associated objects.

In the descriptions of the embodiments of the present application, "a plurality of" refers to more than two (including two). Likewise, "a plurality of groups" refers to more than two (including two) groups, and "a plurality of pieces" refers to more than two (including two) pieces.

In the descriptions of the embodiments of the present application, it should be understood that orientation or positional relationships indicated by terms such as "center," "longitudinal," "transverse," "length," "width," "thickness," "up," "down," "front," "back," "left," "right," "vertical," "horizontal," "top," "bottom," "inner," "outer," "clockwise," "counterclockwise," "axial," "radial," "circumferential," etc. are based on the orientation or positional relationships shown in the drawings, for ease of description of the embodiments of the present application and simplification of the description only, these terms do not indicate or imply that the apparatus or element referred to must have a specific orientation or be constructed and operated in a specific orientation, and therefore cannot be construed as limitations to the embodiments of the present application.

In the present application, unless otherwise explicitly specified or defined, the terms such as "install", "connect", "connection", and "fix" should be understood in a broad sense. For example, the connection may be a fixed connection, a detachable connection, or an integral connection; the connection may be a mechanical connection, or an electrical connection; or the connection may be a direct connection, an indirect connection through an intermediate, or internal communication between two elements or an interaction relationship between two elements. To a person of normal skill in the art, specific meanings of the above terms in the present application may be construed as dependent on specific situations.

Currently, from the perspective of development of market situations, power batteries are more widely used. The power batteries are not only used in energy storage power systems such as water power stations, thermal power stations, wind power stations, and solar power stations, but also widely used in a plurality of fields such as electric bicycles, electric motorcycles, electric vehicles, military equipment, and aerospace. With continuous expansion of application fields of the power batteries, demands in a market of the power batteries are also continuously expanded.

In a related technology, a battery cell generally includes a housing body having an opening, a housing cover, an electrode assembly, an insulating member, and a plastic member. The insulating member is connected to a circumferential side of the plastic member to jointly wrap the electrode assembly, to implement insulation between the electrode assembly and a housing. However, in a process of mounting the electrode assembly of the foregoing structure into the housing, the insulating member easily has wrinkles and edge rolling in a process in which the insulating member rubs against the housing, and even the insulating member is prone to be separated from the plastic member. Consequently, the electrode assembly is exposed, the electrode assembly is in contact with an inner wall surface of the housing, and the housing is corroded, affecting use reliability of the battery cell.

In view of this, to resolve the foregoing problems, the present application provides a battery cell including a housing, an electrode assembly, a bracket, and an insulating member. The insulating member may completely wrap the electrode assembly. In a process of mounting the electrode assembly wrapped with the insulating member into the housing, a probability that the insulating member is detached from the electrode assembly can be reduced. After the electrode assembly is mounted into the housing, a first insulating portion of the insulating member is located between the bracket and an active material coating portion, so that the first insulating portion is isolated from the housing by using the bracket, to further reduce a risk of corrosion of the housing.

The battery cell disclosed in the embodiments of the present application may be used in power consuming apparatuses using batteries as power supplies or various energy storage systems using the batteries as energy storage elements. The power consuming apparatus may be but is not limited to a mobile phone, a tablet, a notebook computer, an electric toy, an electric tool, an electric scooter, an electric vehicle, a ship, a spacecraft, or the like. The electric toy may include a fixed or mobile electric toy, such as a game console, an electric vehicle toy, an electric ship toy, and an electric airplane toy. The spacecraft may include an airplane, a rocket, a space shuttle, a spaceship, or the like.

For ease of description, the following embodiments are described by using an example in which a power consuming apparatus 1000 according to an embodiment of the present application is a vehicle.

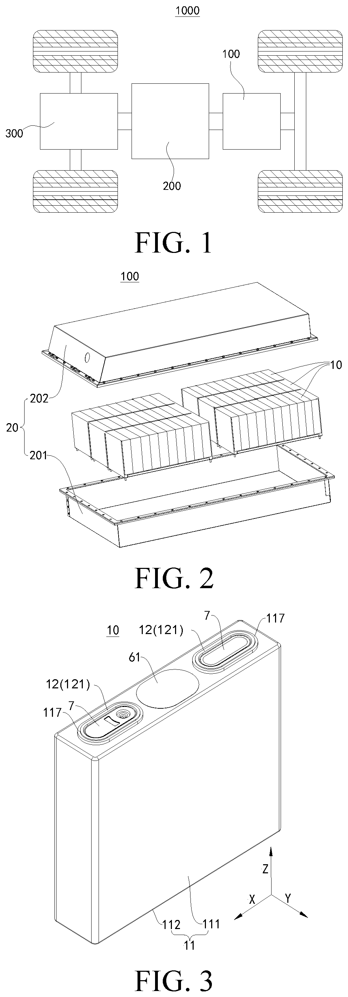

Referring to FIG. 1, FIG. 1 is a schematic structural diagram of a vehicle according to some embodiments of the present application. The vehicle may be an oil-fueled vehicle, a gas-powered vehicle, or a new energy vehicle. The new energy vehicle may be a battery electric vehicle, a hybrid electric vehicle, an extended-range electric vehicle, or the like. A battery 100 is arranged inside the vehicle, and the battery 100 may be arranged at the bottom, the front, or the back of the vehicle. The battery 100 may be used for supply power to the vehicle. For example, the battery 100 may serve as an operation power supply of the vehicle. The vehicle may further include a controller 200 and a motor 300. The controller 200 is used for controlling the battery 100 to supply electricity to the motor 300 to be used for, for example, operating electricity requirements during start-up, navigation, and running of the vehicle.

In some embodiments of the present application, the battery 100 may not only serve as the operation power source for the vehicle, but also serve as a driving power source for the vehicle, to replace or partially replace fuel or natural gas to provide driving power for the vehicle.

Referring to FIG. 2, FIG. 2 is an exploded view of a battery 100 according to some embodiments of the present application. The battery 100 includes a box 20 and a battery cell 10. The battery cell 10 is accommodated inside the box 20.

The box 20 is configured to provide an accommodating space for the battery cell 10, and the box 20 may have a plurality of structures. In some embodiments, the box 20 may include a first portion 201 and a second portion 202. The first portion 201 and the second portion 202 cover each other, and the first portion 201 and the second portion 202 jointly define the accommodating space for accommodating the battery cell 10. The second portion 202 may be a hollow structure with an opening on an end, the first portion 201 may be a plate-shaped structure, and the first portion 201 covers an opening side of the second portion 202, so that the first portion 201 and the second portion 202 jointly define the accommodating space. The first portion 201 and the second portion 202 each may alternatively be a hollow structure with an opening on a side, and the opening side of the first portion 201 covers the opening side of the second portion 202. Certainly, the box 20 formed by the first portion 201 and the second portion 202 may have various shapes, for example, a cylinder and a cuboid.

There may be a plurality of battery cells 10 in the battery 100, and the plurality of battery cells 10 may be connected to each other in series, in parallel, or in a parallel-series manner. The parallel-series manner indicates that the plurality of battery cells 10 are connected in both series and parallel. The plurality of battery cells 10 may be directly connected in series or in parallel or in parallel-series, and then an entirety formed by the plurality of battery cells 10 is accommodated in the box 20. Certainly, the battery 100 may be in a battery 100 module form in which the plurality of battery cells 10 may alternatively be first connected in series, in parallel, or in parallel-series, then a plurality of battery 100 modules are connected in series, in parallel, or in parallel-series, to form as an entirety, and the entirety is accommodated in the box 20. The battery 100 may further include other structures. For example, the battery 100 may further include a bus component, configured to electrically connect the plurality of battery cells 10.

Each battery cell 10 may be a secondary battery or a primary battery; or may be a lithium-sulfur battery, a sodium ion battery, or a magnesium-ion battery, but is not limited thereto. The battery cell 10 may be in a shape of a cylinder, a flat body, or a cuboid, or in another shape.

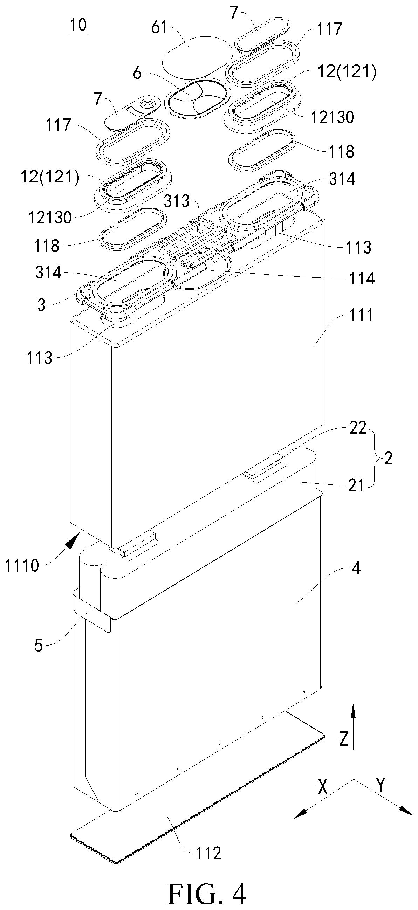

Referring to FIG. 3 and FIG. 4, FIG. 3 is a three-dimensional view of a battery 100 according to some embodiments of the present application; and FIG. 4 is a structural exploded view of a battery 100 according to some embodiments of the present application. The battery cell 10 is a smallest unit forming the battery 100. The battery cell 10 includes a housing 11, an electrode assembly 2, and an insulating member 4. The housing 11 includes a housing cover 112 and a housing body 111 having an opening 1110.

The housing cover 112 refers to a component that covers the opening 1110 of the housing body 111 to isolate an internal environment of the battery cell 10 from an external environment. Without limitation, a shape of the housing cover 112 may be adapted to a shape of the housing body 111 to fit the housing body 111. Optionally, the housing cover 112 may be made of a material (for example, an aluminum alloy) having particular stiffness and strength. In this way, the housing 112 is not easily deformed when being squeezed or collided, so that the battery cell 10 can have higher structural strength and reliability can also be improved. A functional component such as an electrode terminal may be arranged on the housing cover 112. The electrode terminal may be configured to electrically connect to the electrode assembly 2, so as to output or input electric energy of the battery cell 10. In some embodiments, a pressure relief mechanism configured to relieve an internal pressure when the internal pressure or a temperature of the battery cell 10 reaches a threshold may be further arranged on the housing cover 112. The housing cover 112 may be made of a plurality of materials, for example, copper, iron, aluminum, stainless steel, aluminum alloy, and plastic, which are not particularly limited in this embodiment of the present application. In some embodiments, the insulating member 4 may be further arranged on an inner side of the housing cover 112. The insulating member 4 may be configured to isolate an electrical connection component inside the housing body 111 from the housing cover 112, to reduce a risk of a short circuit. For example, the insulating member 4 may be made of plastic, rubber, or the like.

The housing body 111 is a component configured to match the housing cover 112 to form an internal environment of the battery cell 10. The formed internal environment may be configured to accommodate the electrode assembly 2, an electrolyte solution, and other components. The housing body 111 and the housing cover 112 may be independent components. The opening 1110 may be provided on the housing body 111, so that the housing cover 112 covers the opening 1110 at the opening 1110 to form the internal environment of the battery cell 10. Without limitation, the housing cover 112 and the housing body 111 may alternatively be integrated. Specifically, the housing cover 112 and the housing body 111 may first form a common connection surface before other components are put into the housing. When the interior of the housing body 111 needs to be encapsulated, the housing cover 112 covers the housing body 111. The housing body 111 may be in various shapes and various sizes, for example, a rectangular shape, a cylindrical shape, and a hexagonal prism shape. Specifically, the shape of the housing body 111 may be determined according to a specific shape and size of the electrode assembly 2. The housing body 111 may be made of a plurality of materials, for example, copper, iron, aluminum, stainless steel, aluminum alloy, and plastic, which are not particularly limited in this embodiment of the present application.

The electrode assembly 2 is a component, in which an electrochemical reaction occurs, in the battery cell 10. In FIG. 3 and FIG. 4, an X direction is a length direction of the electrode assembly 2, a Y direction is a thickness direction of the electrode assembly 2, and a Z direction is a height direction of the electrode assembly 2. The electrode assembly 2 may include one or more battery cores. The electrode assembly 2 mainly includes a positive electrode plate and a negative electrode plate that are wound or stacked, and a separator is usually arranged between the positive electrode plate and the negative electrode plate. Parts of the positive electrode plate and the negative electrode plate that have active materials constitute a main body of the electrode assembly 2, and parts of the positive electrode plate and the negative electrode plate that do not have the active materials each constitute a tab. The positive electrode tab and the negative electrode tab may be jointly located on one end of the main body or may be respectively located on two ends of the main body. During charging and discharging of the battery 100, the positive active material and the negative active material react with the electrolyte solution, and the tabs are connected to electrode terminals to form a current loop.

In some embodiments, the electrode terminal is a terminal 12, and the terminal 12 is arranged on the housing 11. The electrode assembly 2 includes a conductive portion 22 and an active material coating portion 21. The active material coating portion 21 is arranged in the housing 11. The conductive portion 22 is electrically connected to the active material coating portion 21 and the terminal 12, to form a current loop.

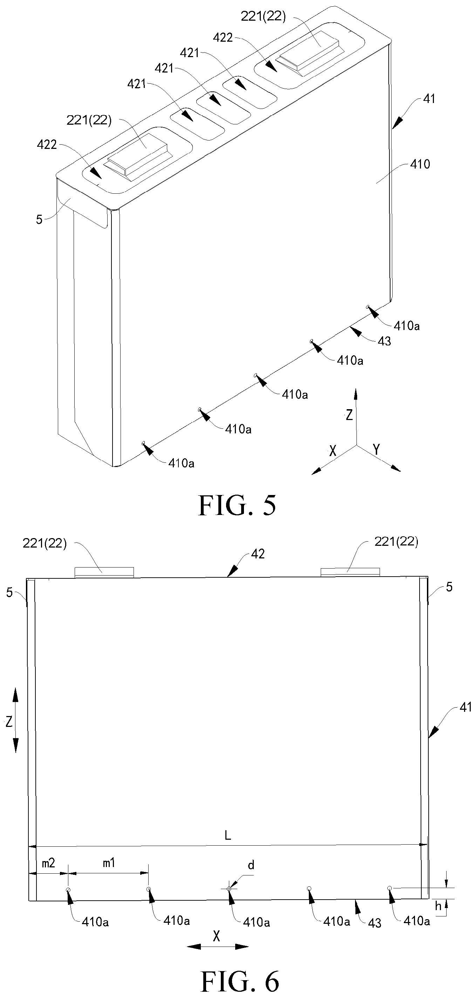

Referring to FIG. 4 again, and further referring to FIG. 5, FIG. 5 is a schematic structural diagram of an electrode assembly 2 of a battery 100, an insulating member 4, and a protection member 5 according to some embodiments of the present application. The battery cell 10 further includes a bracket 3. The bracket 3 is arranged in the housing body 111, and the bracket 3 is located on an end of the active material coating portion 21 away from the housing cover 112.

The battery cell 10 further includes the insulating member 4. The insulating member 4 includes a main insulating portion 41, a first insulating portion 42, and a second insulating portion 43. The main insulating portion 41 is arranged on a circumferential side of the active material coating portion 21. The first insulating portion 42 is arranged between the bracket 3 and the end of the active material coating portion 21 away from the housing cover 112, that is, the first insulating portion 42 of the insulating member 4 is sandwiched between the bracket 3 and the end of the active material coating portion 21 away from the housing cover 112. The second insulating portion 43 is arranged on an end of the active material coating portion 21 close to the housing cover 112.

A cross section of the active material coating portion 21 may be circular, rectangular, polygonal, or the like. When the cross section of the active material coating portion 21 is circular, the main insulating portion 41 may be wound into a shape adapted to a shape of the circumferential side (a cylindrical surface) of the active material coating portion 21, to wrap the circumferential side of the active material coating portion 21, that is, a shape of a cross section of the main insulating portion 41 is a ring. When the cross section of the active material coating portion 21 is rectangular, the main insulating portion 41 may be folded into a shape adapted to a shape of the circumferential side (four side wall surfaces) of the active material coating portion 21, to wrap the circumferential side of the active material coating portion 21, that is, a shape of a cross section of the main insulating portion 41 is a rectangular ring shape. When the cross section of the active material coating portion 21 is polygonal, the main insulating portion 41 may be folded into a shape adapted to a shape of the circumferential side (a plurality of side wall surfaces) of the active material coating portion 21, to wrap the circumferential side of the active material coating portion 21, that is, a shape of a cross section of the main insulating portion 41 is a polygonal ring.

In the technical solution of this embodiment of the present application, the insulating member 4 is set to include the main insulating portion 41, the first insulating portion 42, and the second insulating portion 43, so that the insulating member 4 can completely wrap the electrode assembly 2. In a process of mounting the electrode assembly 2 wrapped with the insulating member 4 into the housing 11, a probability that the insulating member 4 is detached from the electrode assembly 2 can be reduced. After the electrode assembly 2 is mounted into the housing 11, the first insulating portion 42 of the insulating member 4 is located between the bracket 3 and the active material coating portion, that is, the active material coating portion 21 is further isolated from the housing 11 by using the bracket 3, so that exposure of the active material coating portion 21 can be fully reduced, to further reduce a risk of failure and damage of the electrode assembly 2, reduce a risk of corrosion of the housing 11, and improve reliability and stability of the battery cell 10.

Referring to FIG. 5 again, a liquid passage hole 410a is provided at a position of the main insulating portion 41 close to the second insulating portion 43. There may be a plurality of liquid passage holes 410a, and the plurality of liquid passage holes 410a are provided at intervals. The plurality of liquid passage holes 410a can increase fluidity of an electrolyte solution, increase a contact area between the electrolyte solution and the active material coating portion 21, and alleviate a problem of poor infiltration of the active material coating portion 21.

A shape of the liquid passage hole 410a may be a circular hole, a square hole, or the like. Shapes of the plurality of liquid passage holes 410a may be the same or different, and flow areas of the plurality of liquid passage holes 410a may be the same or different. There may be two, three, or more liquid passage holes 410a. The shape and a parameter design of the liquid passage hole 410a may be specifically selected according to an actual requirement.

Referring to FIG. 5 again, and further referring to FIG. 6, FIG. 6 is a side view of a structure shown in FIG. 5 from a perspective. In an optional embodiment, the plurality of liquid passage holes 410a are provided at intervals in a length direction of the main insulating portion 41, and a sum of sizes of the plurality of liquid passage holes 410a in the length direction of the main insulating portion 41 is less than a half of a length L of the main insulating portion 41, so that when the insulating member 4 has an effect of being infiltrated into the electrolyte solution, impact on strength of the insulating member 4 is reduced as much as possible.

To improve the effect of infiltrating the insulating member 4, a distance h between the liquid passage hole 410a and the second insulating portion 43 may range from 1 mm to 8 mm. For example, the distance h between each liquid passage hole 410a and the second insulating portion 43 may be 1 mm, 2 mm, 5 mm, 6 mm, or 8 mm.

In some specific embodiments, the distance h between the liquid passage hole 410a and the second insulating portion 43 ranges from 3 mm to 5 mm, so that the effect of infiltrating the insulating member 4 is further improved.

Referring to FIG. 6 again, a diameter d of the liquid passage hole 410a ranges from 0.5 mm to 1 mm. For example, the diameter of the liquid passage hole 410a may be 0.5 mm, 0.6 mm, 0.7 mm, 0.8 mm, 0.9 mm, or 1 mm. The diameter of the liquid passage hole 410a is excessively large, causing easily breakage of the insulating member 4. The diameter of the liquid passage hole 410a is excessively small, affecting infiltration efficiency of the electrolyte solution. In this embodiment, the diameter of the liquid passage hole 410a is defined to meet the foregoing condition, so that use reliability of the insulating member 4 can be improved, and efficiency of infiltrating the insulating member 4 into the electrolyte solution can also be improved.

Referring to FIG. 5 and FIG. 6 again, the main insulating portion 41 includes a plurality of main body portions 410. The plurality of main body portions 410 are sequentially connected end to end to form a ring shape, the plurality of main body portions 410 jointly wrap around the circumferential side of the active material coating portion 21 and any two adjacent main body portions 410 are connected, the liquid passage holes 410a are provided on the main body portions 410, and a quantity of liquid passage holes 410a on each main body portion 410 is greater than or equal to 3, so that the efficiency of infiltrating the insulating member 4 into the electrolyte solution can be improved.

In some embodiments, a distance between two adjacent liquid passage holes 410a is m1. In two adjacent side walls of the electrode assembly 2, a distance between the other side wall and an outermost liquid passage hole 410a on the main body portion 410 covering one side wall is m2, and m2 is less than m1, so that the efficiency of infiltrating the insulating member 4 into the electrolyte solution can be further improved. m1 may range from 20 mm to 35 mm, for example, m1 may be 20 mm, 24 mm, 28 mm, 30 mm, 32 mm, or 35 mm, and m2 may range from 5 mm to 20 mm, for example, m2 may be 5 mm, 8 mm, 10 mm, 15 mm, or 20 mm.

An explosion-proof valve 6 is arranged on the housing 11, the insulating member 4 has an air vent 421, and the air vent 421 corresponds to a position of the explosion-proof valve 6. The explosion-proof valve 6 is integrally formed, and the explosion-proof valve 6 has a thickness-reduced portion. Alternatively, the explosion-proof valve 6 is a separated structure. The air vent 421 is provided on the insulating member 4, and the explosion-proof valve 6 is in communication with the air vent 421, so that the explosion-proof valve 6 can normally perform exhaustion and pressure relief.

In some embodiments, the explosion-proof valve 6 may be arranged on the housing cover 112. Correspondingly, the air vent 421 is provided on the second insulating portion 43 of the insulating member 4.

In some other embodiments, the explosion-proof valve 6 may be arranged on a side wall of the housing body 111. Correspondingly, the air vent 421 is provided on the main insulating portion 41 of the insulating member 4.

Referring to FIG. 3 to FIG. 5 again, the explosion-proof valve 6 is located on a wall of the housing body 111 opposite to the bracket 3, the air vent 421 is provided on the first insulating portion 42, the bracket 3 has an exhaust hole 313, and the exhaust hole 313 corresponds to a position of the explosion-proof valve 6.

In the technical solution, in a process of mounting the electrode assembly 2 wrapped with the insulating member 4 into the housing body 111, the first insulating portion 42 may move in a housing entering direction to gradually approach the bracket 3 until the air vent 421 and the exhaust hole 313 on the bracket 3 correspond to the explosion-proof valve 6, to reduce a probability that the explosion-proof valve 6 damages the first insulating portion 42 in a housing entering process, fully reduce exposure of the active material coating portion 21, and reduce a risk of corrosion of the housing 11, so as to further improve reliability and stability of the electrode assembly 2 and the battery cell 10.

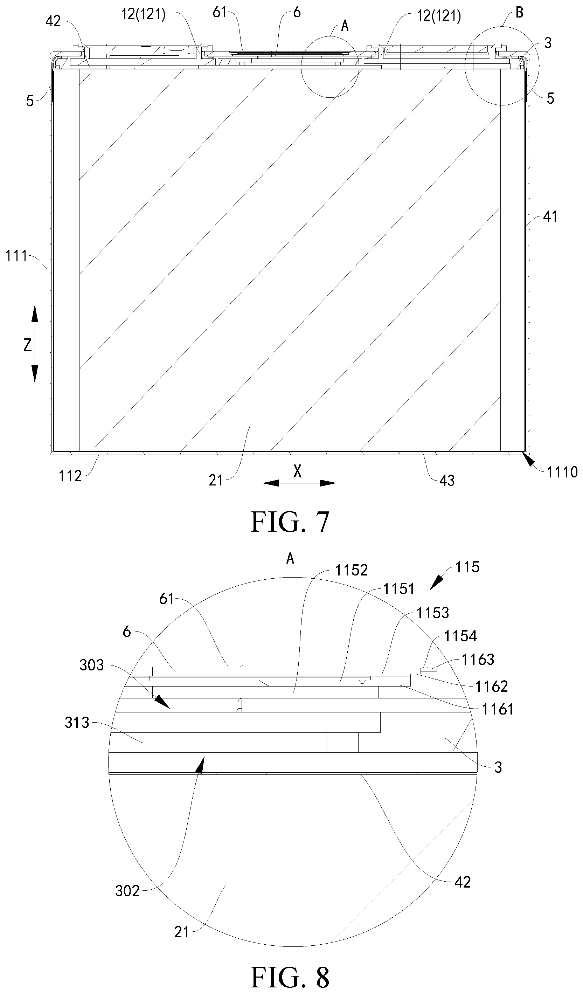

Further referring to FIG. 7 and FIG. 8, FIG. 7 is a structural cross-sectional view of a battery 100 according to some embodiments of the present application, and FIG. 8 is an enlarged view of a portion A in FIG. 7. The explosion-proof valve 6 and the housing body 111 may be in a fixed connection or may be in a detachable connection.

Specifically, a first mounting hole 113 and a second mounting hole 114 are provided on the housing body 111. The terminal 12 is arranged in the first mounting hole 113. The explosion-proof valve 6 is arranged in the second mounting hole 114 and covers the second mounting hole 114 to close the second mounting hole 114 and isolate an environment inside the housing body 111 from an external environment.

A side of the explosion-proof valve 6 faces the interior of the housing body 111, and the side of the explosion-proof valve 6 is subject to a pressure inside the battery cell 10. When the pressure inside the battery cell 10 is greater than a threshold, the pressure inside the battery cell 10 may break through the explosion-proof valve 6. In this case, the interior of the housing body 111 is in communication with the external environment, to implement pressure relief of the battery cell 10. Use safety of the battery cell 10 can be improved through arrangement of the explosion-proof valve 6, and a possibility that the battery cell 10 explodes is reduced.

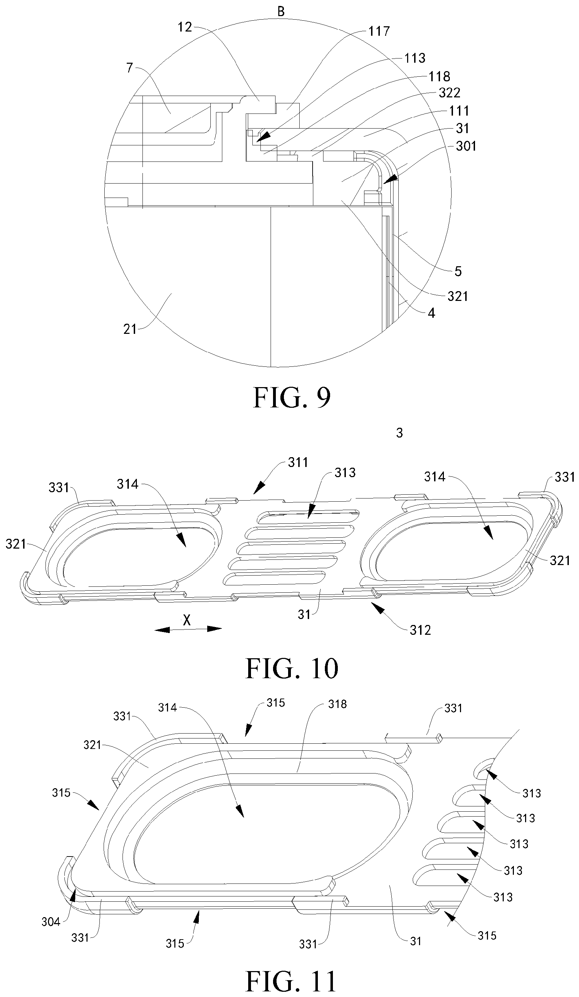

Referring to FIG. 7 again, and further referring to FIG. 9, FIG. 9 is an enlarged view of a portion B in FIG. 7. The second mounting hole 114 includes a first hole section 1151 and a second hole section 1152. The first hole section 1151 and the second hole section 1152 are arranged in a thickness direction of the housing body 111 and are in communication with each other. The second hole section 1152 is closer to an inner cavity of the housing body 111 than the first hole section 1151.

A first step surface 1161 is formed between the first hole section 1151 and the second hole section 1152. The explosion-proof valve 6 is arranged in the first hole section 1151 and cooperates with the first step surface 1161.

Optionally, the second mounting hole 114 further includes a third hole section 1153. The third hole section 1153 is in communication with an end of the first hole section 1151 away from the second hole section 1152. A second step surface 1162 is formed between the first hole section 1151 and the third hole section 1153. The explosion-proof valve 6 is connected to the housing body 111 through welding to form a welding seam. The third hole section 1153 is configured to accommodate the welding seam.

Optionally, as shown in FIG. 3, FIG. 4, FIG. 7, and FIG. 8, the battery cell 10 further includes a protection plate 61. The protection plate 61 is arranged on a side of the explosion-proof valve 6 facing away from the second hole section 1152, and is configured to cover the explosion-proof valve 6. The protection plate 61 may be a plate-shaped structure or may be a film-shaped structure. This is not excessively limited herein.

In the technical solution, the protection plate 61 covers the explosion-proof valve 6, so that the explosion-proof valve 6 can be isolated from the external environment, to prevent dust. In addition, a contact area between the explosion-proof valve 6 and external air can be reduced, thereby reducing an oxidation speed of the explosion-proof valve 6.

The second mounting hole 114 further includes a fourth hole section 1154. The fourth hole section 1154 is in communication with an end of the third hole section 1153 away from the first hole section 1151. A third step surface 1163 is formed between the fourth hole section 1154 and the third hole section 1153. The protection plate 61 is arranged in the fourth hole section 1154 and cooperates with the third step surface 1163.

In some embodiments, there is one exhaust hole 313. In some other embodiments, referring to FIG. 4 again, there are a plurality of exhaust holes 313. The plurality of exhaust holes 313 are provided at intervals in a length direction and/or a width direction of the bracket 3. In this way, exhaustion efficiency can be improved.

In some embodiments, there is one air vent 421. In some other embodiments, referring to FIG. 5 again, there are a plurality of air vents 421. The plurality of air vents 421 are provided at intervals in a length direction of the first insulating portion 42, and the plurality of air vents 421 may be provided in the middle of the first insulating portion 42 in the length direction and are spaced away in the length direction of the first insulating portion 42. In this way, exhaustion efficiency can be improved.

Referring to FIG. 10 and FIG. 11, FIG. 10 is a schematic structural diagram of a bracket 3 of a battery cell 10 from a perspective according to some embodiments of the present application. FIG. 11 is a partial enlarged view of the bracket 3 shown in FIG. 10. The bracket 3 includes a bracket body 31. The bracket body 31 has a first side 311 and a second side 312. The first side 311 and the second side 312 are arranged opposite to each other in a thickness direction of the bracket body 31. The exhaust hole 313 extends through the first side 311 and the second side 312.

The bracket 3 further includes a first abutting portion 321. The first abutting portion 321 is arranged on the first side 311 of the bracket body 31, and the first abutting portion 321 protrudes in a direction away from the second side 312 of the bracket body 31. The first abutting portion 321 is configured to abut against the end of the active material coating portion 21 away from the housing cover 112, so that the exhaust hole 313 and the active material coating portion 21 jointly form a first exhaust channel 302.

That the first abutting portion 321 is arranged on the first side 311 of the bracket body 31 specifically means that the first abutting portion 321 is arranged on a side of the bracket body 31 facing the active material coating portion 21. Because the first abutting portion 321 abuts against the end of the active material coating portion 21 away from the housing cover 112, the first side 311 of the bracket body 31 and the end of the active material coating portion 21 away from the housing cover 112 are spaced away from each other, so that the first exhaust channel 302 is defined between the first side 311 of the bracket body 31 and the active material coating portion 21, and the exhaust hole 313 is in communication between the first exhaust channel 302 and the explosion-proof valve 6.

In the technical solution, the first abutting portion 321 is arranged on the first side 311 of the bracket body 31, and the first abutting portion 321 abuts against the end of the active material coating portion 21 away from the housing cover 112. This can increase a distance between the first side 311 of the bracket body 31 and the active material coating portion 21, that is, increase a distance between the exhaust hole 313 and the active material coating portion 21, so that the first exhaust channel 302 in communication with the exhaust hole 313 is defined between the first side 311 of the bracket body 31 and the active material coating portion 21, to improve an exhaustion capability. When thermal runaway tends to occur in the battery cell 10, generated gas may first enter the first exhaust channel 302, then pass through the bracket 3 through the exhaust hole 313, and finally may be discharged from the explosion-proof valve 6, to achieve rapid pressure relief, so that a risk that the battery cell 10 burns and explodes can be reduced, and impact on an adjacent battery cell 10 can be reduced, thereby helping improve use reliability and stability of the battery 100.

Referring to FIG. 10 and FIG. 11 again, a gas passage gap 315 is provided in a circumferential direction of the bracket 3. The gas passage gap 315 extends through the first side 311 and the second side 312 of the bracket body 31. The circumferential direction of the bracket 3 matches the housing 11, so that the gas passage gap 315 and the housing 11 jointly form a gas passage channel 301, and the gas passage channel 301 is in communication with the first exhaust channel 302.

The gap means a gap formed by missing one piece at an edge of a structure. The gas passage gap 315 in this embodiment of the present application is a gas passage gap formed by missing one piece in the circumferential direction of the bracket 3. When the bracket 3 matches the housing 11, the housing 11 may close an opening 1110 of the gas passage gap 315, so as to define the gas passage channel 301.

When thermal runaway tends to occur in the battery cell 10, generated gas may first enter the first exhaust channel 302, a part of the gas may pass through the bracket 3 through the exhaust hole 313, the other part of the gas may pass through the bracket 3 through the gas passage channel 301, and the gas may be finally discharged from the explosion-proof valve 6, to implement rapid pressure relief.

In the technical solution, the gas passage gap 315 is provided on the bracket 3, and the gas passage channel 301 may be defined by the gas passage gap 315 and the housing 11, so that gas generated in a circumferential direction of the electrode assembly 2 can move to a position of the explosion-proof valve 6 through the gas passage channel 301 at a corresponding position in a short time, to improve timeliness of pressure relief of the explosion-proof valve 6. In addition, the gas in the first exhaust channel 302 may flow to the exhaust hole 313 and the gas passage channel 301 respectively in a short time, to implement instantaneous pressure relief, and finally may be discharged from the explosion-proof valve 6, to implement final pressure relief, so as to further reduce the risk that the battery cell 10 burns and explodes and improve use reliability and stability of the battery 100. Moreover, during injection, an electrolyte solution may flow to the electrode assembly 2 through the gas passage gap 315, to shorten infiltration time and improve infiltration efficiency.

In some embodiments, a plurality of gas passage gaps 315 are provided in the circumferential direction of the bracket 3, and the plurality of gas passage gaps 315 are provided at intervals. For example, the plurality of gas passage gaps 315 may be evenly distributed in the circumferential direction of the bracket 3, or the plurality of gas passage gaps 315 may be distributed at a local position in the circumferential direction of the bracket 3 in a centralized manner. Each gas passage gap 315 and the housing 11 jointly form one gas passage channel 301, and a plurality of gas passage channels 301 are provided around a circumferential direction of the first exhaust channel 302.

Therefore, the plurality of gas passage gaps 315 are provided, the plurality of gas passage channels 301 may be defined, and a part of the gas in the first exhaust channel 302 spreads in all directions, may pass through the bracket 3 through the plurality of gas passage channels 301, and finally may be discharged from the explosion-proof valve 6. This can greatly reduce the risk that the battery cell 10 burns and explodes and greatly improve the use reliability and stability of the battery 100. During injection, the electrolyte solution may flow to the electrode assembly 2 through the plurality of gas passage gaps 315, to further shorten the infiltration time and greatly improve the infiltration efficiency.

Referring to FIG. 10 and FIG. 11 again, a first extending portion 331 further protrudes on the first side 311 of the bracket body 31, and the first extending portion 331 is arranged around a circumferential direction of the bracket body 31. The first extending portion 331 and the bracket body 31 define a matching slot 30, and the end of the active material coating portion 21 away from the housing cover 112 is arranged in the matching slot 30.

In other words, the bracket body 31 is arranged on an end portion of the electrode assembly 2, and the first extending portion 331 is arranged on a circumferential side of the electrode assembly 2. It should be noted that after the bracket 3 and the electrode assembly 2 may be assembled together, the bracket 3 and the electrode assembly 2 are mounted into the housing 11 together. Alternatively, the bracket 3 may be first pre-mounted into the housing 11, then the electrode assembly 2 is mounted into the housing 11, and the electrode assembly 2 matches the bracket 3.

In an embodiment in which the bracket 3 and the electrode assembly 2 are mounted into the housing 11 together after being assembled, in a process of mounting into the housing, the first extending portion 331 may protect the electrode assembly 2, to reduce a probability that the electrode assembly 2 touches the housing 11, so that occurrence of a phenomenon that the electrode assembly 2 is scratched by the housing 11 is further reduced, to reduce a possibility that an active material of the electrode assembly 2 falls off, avoid an internal short circuit caused by overlapping of the fallen-off active material and an electrode plate with an opposite polarity to a certain extent, avoid corrosion and penetration of the housing 11 caused by a chemical reaction between the fallen-off active material and the housing 11 to a certain extent, and improve use reliability of the battery cell 10. In addition, the first extending portion 331 may be engaged with the electrode assembly 2, to avoid falling off of the bracket 3 before being mounted into the housing to a certain extent, and improve a product yield of the battery cell 10. After the bracket and the electrode assembly are mounted into the housing, the first extending portion 331 may restrict one end of the electrode assembly 2, so that a probability that an outer layer of the active material coating portion 21 of the electrode assembly 2 is in a fluffy state is reduced, and one end of the electrode assembly 2 is further protected, to alleviate a problem that one end of the electrode assembly 2 touches the housing 11. Therefore, occurrence of the phenomenon that the electrode assembly 2 is scratched by the housing 11 is reduced, and the use reliability of the battery cell 10 is improved.

In an embodiment in which the bracket 3 is first pre-mounted into the housing 11, and then the electrode assembly 2 is mounted into the housing 11, the first extending portion 331 may restrict one end of the electrode assembly 2, so that a probability that the outer layer of the active material coating portion 21 of the electrode assembly 2 is in a fluffy state is reduced, and one end of the electrode assembly 2 is further protected, to alleviate a problem that one end of the electrode assembly 2 touches the housing 11. Therefore, occurrence of a phenomenon that the electrode assembly 2 is scratched by the housing 11 is reduced, and use reliability of the battery cell 10 is improved.

Therefore, in the technical solution, the first extending portion 331 may be arranged, to restrict one end of the electrode assembly 2, so that stability of the electrode assembly 2 during shaking of the battery cell 10 is improved, the probability that the outer layer of the active material coating portion 21 of the electrode assembly 2 is in the fluffy state is reduced, and one end of the electrode assembly 2 is further protected, to alleviate the problem that one end of the electrode assembly 2 touches the housing 11. Therefore, occurrence of the phenomenon that the electrode assembly 2 is scratched by the housing 11 is reduced, and the use reliability of the battery cell 10 is improved.

The gas passage gap 315 extends through the first extending portion 331 and the bracket body 31. The formed gas passage channel 301 passes through two sides of the bracket 3 in a thickness direction and is in communication with the first exhaust channel 302 and the explosion-proof valve 6. The gas in the first exhaust channel 302 may flow to the exhaust hole 313 and the gas passage channel 301 respectively in a short time, to implement instantaneous pressure relief, and finally may be discharged from the explosion-proof valve 6, to implement final pressure relief, so as to further reduce the risk that battery cell 10 burns and explodes and improve the use reliability and stability of the battery 100.

In some embodiments, the first extending portion 331 and the first abutting portion 321 are spaced away, the first extending portion 331 and the first abutting portion 321 jointly form a first flow guide channel 304, and the first flow guide channel 304 is in communication with at least one gas passage channel 301 and the first exhaust channel 302.

The first flow guide channel 304 may increase a space occupied by an exhaust path, to help improve the exhaustion capability, and may also play a guiding function, so that the part of the gas entering the first exhaust channel 302 may flow to the gas passage channel 301 along the first flow guide channel 304, and the gas passes through the bracket 3 through the gas passage channel 301 and finally may be discharged from the explosion-proof valve 6, to implement pressure relief, so as to further reduce the risk that the battery cell 10 burns and explodes and improve the use reliability and stability of the battery 100. In addition, the first flow guide channel 304 may guide flow of the electrolyte solution, to further shorten the infiltration time and greatly improve the infiltration efficiency.

In a length direction (an X direction shown in the figure) of the battery cell 10, there are a plurality of gas passage gaps 315 on both sides of the exhaust hole 313, and a plurality of gas passage gaps 315 located on a same side of the exhaust hole 313 share one first flow guide channel 304.

In other words, the plurality of gas passage gaps 315 may be divided into two parts, and the two parts of gas passage gaps 315 are respectively located on two sides of the exhaust hole 313 in the length direction of the battery cell 10. Correspondingly, there are two first flow guide channels 304, and the two first flow guide channels 304 are respectively located on the two sides of the exhaust hole 313 in the length direction of the battery cell 10. In the length direction of the battery cell 10, the first flow guide channel 304 located on one side of the exhaust hole 313 is in communication with a plurality of gas passage gaps 315 at a corresponding position, so that the first flow guide channel 304 is in communication with a plurality of gas passage channels 301 at the corresponding position, and the first flow guide channel 304 located on the other side of the exhaust hole 313 is in communication with a plurality of gas passage gaps 315 at a corresponding position, so that the first flow guide channel 304 is in communication a plurality of gas passage channels 301 at the corresponding position.

When thermal runaway tends to occur in the battery cell 10, generated gas may first enter the first exhaust channel 302, a part of the gas may pass through the bracket 3 through the exhaust hole 313 and flow to the second side 312 of the bracket body 31, the other part of the gas may be divided through the two first flow guide channels 304, then pass through the bracket 3 through the plurality of gas passage channels 301, and flow to the second side 312 of the bracket body 31, and the gas may be finally discharged from the explosion-proof valve 6, to implement rapid pressure relief.

In the technical solution, the gas entering the first exhaust channel 302 may flow to two sides of the exhaust hole 313 in the length direction of the battery cell 10 under the guidance of the two first flow guide channels 304, to implement instantaneous pressure relief, then pass through the bracket 3 through the plurality of gas passage channels 301, and finally may be discharged from the explosion-proof valve 6, to implement final pressure relief, so as to further reduce the risk that the battery cell 10 burns and explodes and improve the use reliability and stability of the battery 100. During injection, the electrolyte solution may flow under the guidance of the two first flow guide channels 304, to shorten the infiltration time and improve the infiltration efficiency.

Referring to FIG. 10 and FIG. 11 again, the first abutting portion 321 is arranged in an arc shape, so that the first abutting portion 321 and the first extending portion 331 define the first flow guide channel 304 in an arc shape, and a contact area between the bracket 3 and the end portion of the electrode assembly 2 can be reduced, thereby reducing a probability of compression damage to the end portion of the electrode assembly 2 caused by the bracket 3.

There are two first abutting portions 321, and the two first abutting portions 321 are respectively located on two sides of the exhaust hole 313. For example, the two first abutting portions 321 are respectively formed as arc-shaped plates. Two ends of each arc-shaped plate are spaced away, and are arranged opposite to the exhaust hole 313.

The plurality of gas passage gaps 315 located on the same side of the exhaust hole 313 are provided at intervals around a circumferential direction of a corresponding first abutting portion 321, so that the plurality of gas passage gaps 315 located on the same side of the exhaust hole 313 are arranged in an extending direction of a corresponding first flow guide channel 304. In this way, a plurality of gas passage channels 301 are all in communication with the same first flow guide channel 304, and the gas at the first exhaust channel 302 flows in all directions of the first exhaust channel 302 under the guidance of the two first flow guide channels 304, passes through the bracket 3 through the plurality of gas passage channels 301, and finally may be discharged from the explosion-proof valve 6.

Therefore, in the technical solution, the first abutting portion 321 may be arranged in the arc shape, to reduce a probability of compression damage to the end portion of the electrode assembly 2 caused by the bracket 3. In addition, the first abutting portion 321 and the first extending portion 331 may define the first flow guide channel 304 arranged in the arc shape, to increase a space occupied by the first flow guide channel 304, so that all the plurality of gas passage gaps 315 located on the same side of the exhaust hole 313 are in communication with the first flow guide channel 304, to improve space utilization of the bracket 3 and further improve the exhaustion capability. In addition, the infiltration time can be further shortened, and the infiltration efficiency can be further improved.

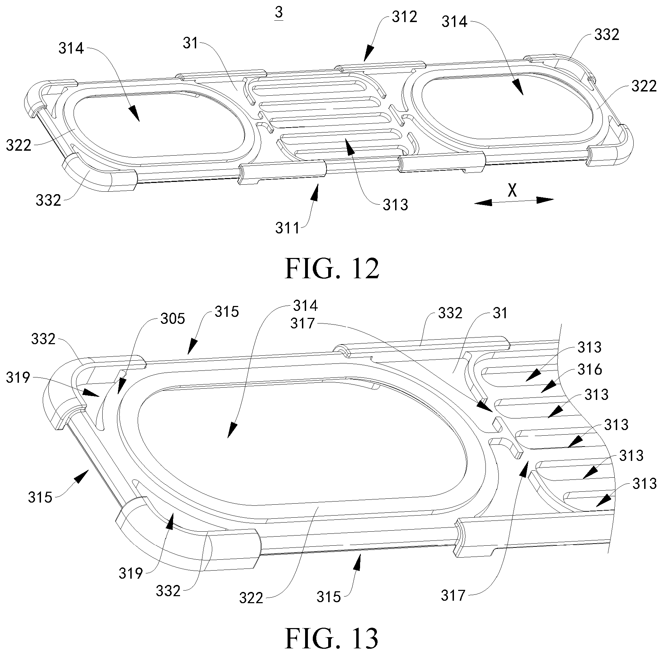

Referring to FIG. 10 again, and further referring to FIG. 12 and FIG. 13, FIG. 12 is a schematic structural diagram of a bracket 3 of a battery cell 10 from another perspective according to some embodiments of the present application. FIG. 13 is a partial enlarged view of the bracket 3 shown in FIG. 12. A second abutting portion 322 is arranged on the second side 312 of the bracket body 31, the second abutting portion 322 protrudes in a direction away from the first side 311, and the second abutting portion 322 is configured to abut against the wall of the housing 11 on which the explosion-proof valve 6 is arranged, so that the bracket 3 and the wall of the housing 11 jointly form a second exhaust channel 303, and the second exhaust channel 303 is in communication with at least one gas passage channel 301.

That the second abutting portion 322 is arranged on the second side 312 of the bracket body 31 specifically means that the second abutting portion 322 is arranged on a side of the bracket body 31 away from the end portion of the electrode assembly 2. Because the second abutting portion 322 abuts against the wall of the housing 11 on which the explosion-proof valve 6 is arranged, the second side 312 of the bracket body 31 and the wall of the housing 11 are spaced away, so that the second exhaust channel 303 is defined between the second side 312 of the bracket body 31 and the wall of the housing 11.

When thermal runaway tends to occur in the battery cell 10, generated gas may first enter the first exhaust channel 302, a part of the gas may pass through the bracket 3 through the exhaust hole 313, the other part of the gas may pass through the bracket 3 through the gas passage channel 301, and the gas finally gathers in the second exhaust channel 303 and is discharged from the explosion-proof valve 6, to implement rapid pressure relief.

In the technical solution, the second abutting portion 322 is arranged on the second side 312 of the bracket body 31, and the second abutting portion 322 abuts against the wall of the housing 11 on which the explosion-proof valve 6 is arranged, so that the second exhaust channel 303 in communication with the gas passage channel 301 is defined between the second side 312 of the bracket body 31 and the wall of the housing 11, to increase the space occupied by the exhaust path, improve the exhaustion capability, reduce the risk that the battery cell 10 burns and explodes, reduce the impact on the adjacent battery cell 10, and help improve the use reliability and stability of the battery 100.

Referring to FIG. 12 and FIG. 13 again, a second extending portion 332 further protrudes on the second side 312 of the bracket body 31, the second extending portion 332 and the second abutting portion 322 are spaced away, the second extending portion 332 and the second abutting portion 322 jointly form a second flow guide channel 305, and the second flow guide channel 305 is in communication with at least one gas passage channel 301 and the second exhaust channel 303.

The second flow guide channel 305 may increase the space occupied by the exhaust path, to help improve the exhaustion capability, and may also play a guiding function, so that the part of gas passing through the bracket 3 through the gas passage channel 301 may flow to the second exhaust channel 303 along the second flow guide channel 305 and finally may be discharged from the explosion-proof valve 6, to implement pressure relief, so as to further reduce the risk that the battery cell 10 burns and explodes and improve the use reliability and stability of the battery 100. In addition, the second flow guide channel 305 may guide flow of the electrolyte solution, to further shorten the infiltration time and greatly improve the infiltration efficiency.

In the length direction of the battery cell 10, there are a plurality of gas passage gaps 315 on both sides of the exhaust hole 313, and a plurality of gas passage gaps 315 located on a same side of the exhaust hole 313 share one second flow guide channel 305.

In other words, the plurality of gas passage gaps 315 may be divided into two parts, and the two parts of gas passage gaps 315 are respectively located on two sides of the exhaust hole 313 in the length direction of the battery cell 10. Correspondingly, there are two second flow guide channels 305, and the two second flow guide channels 305 are respectively located on the two sides of the exhaust hole 313 in the length direction of the battery cell 10. In the length direction of the battery cell 10, the second flow guide channel 305 located on one side of the exhaust hole 313 is in communication with a plurality of gas passage gaps 315 at a corresponding position, so that the second flow guide channel 305 is in communication with a plurality of gas passage channels 301 at the corresponding position, and the second flow guide channel 305 located on the other side of the exhaust hole 313 is in communication with a plurality of gas passage gaps 315 at a corresponding position, so that the second flow guide channel 305 is in communication a plurality of gas passage channels 301 at the corresponding position.

When thermal runaway tends to occur in the battery cell 10, generated gas may first enter the first exhaust channel 302, a part of the gas may pass through the bracket 3 through the exhaust hole 313 and flow to the second side 312 of the bracket body 31, the other part of the gas may pass through the bracket 3 through the plurality of gas passage channels 301, flow to the second side 312 of the bracket body 31, and then flow along the second flow guide channel 305, and the gas finally gathers in the second exhaust channel 303, and is discharged from the explosion-proof valve 6, to implement rapid pressure relief.

During injection, the electrolyte solution may flow to the plurality of gas passage gaps 315 along the second flow guide channel 305, and the electrolyte solution passing through the gas passage gaps 315 may first flow along the second flow guide channel 305, and then flow to the electrode assembly 2, or may directly flow to the electrode assembly 2, to shorten the infiltration time of the electrolyte solution and improve the infiltration efficiency.

In the technical solution, the gas passing through the bracket 3 may flow to the second exhaust channel 303 located in the middle under the guidance of the second flow guide channel 305, and finally may be discharged from the explosion-proof valve 6, to implement final pressure relief, so as to further reduce the risk that the battery cell 10 burns and explodes and improve the use reliability and stability of the battery 100. The electrolyte solution may flow to the plurality of gas passage gaps 315 under the guidance of the second flow guide channel 305, to shorten the infiltration time and improve the infiltration efficiency.

Referring to FIG. 13 again, the second side 312 of the bracket body 31 has a mounting recessed portion 316. The mounting recessed portion 316 is recessed toward the first side 311, the second exhaust channel 303 is defined between the mounting recessed portion 316 and the wall of the housing 11 on which the explosion-proof valve 6 is arranged, and the exhaust hole 313 is provided on a bottom wall of the mounting recessed portion 316.

The mounting recessed portion 316 is a groove that is recessed relative to a surface of the second side 312 of the bracket body 31. The bottom wall of the mounting recessed portion 316 is lower than the surface of the second side 312 of the bracket body 31, so that a surface on which the exhaust hole 313 is located is lower than the surface of the second side 312 of the bracket body 31.

In the technical solution, the mounting recessed portion 316 may be arranged on the second side 312 of the bracket body 31, to increase a distance between the wall of the housing 11 on which the explosion-proof valve 6 is arranged and the exhaust hole 313, increase the space occupied by the exhaust path, and improve the exhaustion capability, so as to further reduce the risk that the battery cell 10 burns and explodes, reduce the impact on the adjacent battery cell 10, and help improve the use reliability and stability of the battery 100.

A gas passage hole 317 is provided on a side wall of the mounting recessed portion 316. The gas passage hole 317 is in communication with the second flow guide channel 305 and the second exhaust channel 303. The gas in the second flow guide channel 305 may flow to the second exhaust channel 303 through the gas passage hole 317, and finally may be discharged from the explosion-proof valve 6, to implement pressure relief, reduce the risk that the battery cell 10 burns and explodes, reduce the impact on the adjacent battery cell 10, and help improve the use reliability and stability of the battery 100.

In some embodiments, a weight reducing groove 319 is further provided on the second side 312 of the bracket body 31. This can not only reduce a weight of the bracket 3, and but also further increase the space occupied by the exhaust path, to improve the exhaustion capability and further improve the space utilization.

Referring to FIG. 12 and FIG. 13 again, the second abutting portion 322 is arranged in an arc shape, so that the second abutting portion 322 and the second extending portion 332 define the second flow guide channel 305 in an arc shape.

There are two second abutting portions 322, and the two second abutting portions 322 are respectively located on two sides of the exhaust hole 313. For example, the two first abutting portions 321 are respectively formed as arc-shaped plates. Two ends of each arc-shaped plate are spaced away, and are arranged opposite to the exhaust hole 313. For another example, the two first abutting portions 321 respectively form closed annular plates.

The plurality of gas passage gaps 315 located on the same side of the exhaust hole 313 are provided at intervals around a circumferential direction of a corresponding second abutting portion 322, so that the plurality of gas passage gaps 315 located on the same side of the exhaust hole 313 are arranged in an extending direction of a corresponding second flow guide channel 305. In this way, a plurality of gas passage channels 301 are all in communication with the same second flow guide channel 305, and gas flowing out of the plurality of gas passage channels 301 gathers in the second exhaust channel 303 under the guidance of the second flow guide channel 305, and finally may be discharged from the explosion-proof valve 6.

Therefore, in the technical solution, the second abutting portion 322 is arranged in the arc shape, the plurality of gas passage gaps 315 located on the same side of the exhaust hole 313 are provided at intervals around the circumferential direction of the corresponding second abutting portion 322, and the second flow guide channel 305 arranged in the arc shape may be defined, to increase a space occupied by the second flow guide channel 305, improve the space utilization of the bracket 3, and further improve the exhaustion capability. In addition, the infiltration time can be further shortened, and the infiltration efficiency can be further improved.

Referring to FIG. 3 to FIG. 5 again, the terminal 12 includes a first terminal 121. The first terminal 121 is arranged on a wall of the housing body 111 opposite to the housing cover 112. An avoidance hole 422 is provided on the first insulating portion 42, and the avoidance hole 422 is for the conductive portion 22 to pass through, so that the conductive portion 22 is capable of being connected to the first terminal 121.

In the technical solution, the avoidance hole 422 is provided on the first insulating portion 42, so that the first insulating portion 42 can avoid the conductive portion 22. This can reduce damage of the first insulating portion 42 to the conductive portion 22, and also facilitate an electrical connection between the conductive portion 22 and the first terminal 121 on the housing 11. In addition, when the electrolyte solution is injected into the housing 11, the electrolyte solution may enter the electrode assembly 2 through the avoidance hole 422, to accelerate an infiltration speed of the electrolyte solution.

In an optional solution, the terminal 12 includes two first terminals 121 having opposite polarities. Two avoidance holes 422 are provided on the first insulating portion 42. One first terminal 121 is a positive terminal, and the other first terminal 121 is a negative terminal.

In other words, the two first terminals 121 are arranged on a same side surface of the housing 11. The two first terminals 121 may be separately electrically connected to the conductive portion 22 at the two avoidance holes 422 on the first insulating portion 42, which makes the connection more convenient and helps improve assembly efficiency of the battery cell 10.

Referring to FIG. 3 and FIG. 4 again, the terminal 12 has a via hole 12130. The via hole 12130 is in communication with spaces at an inner side and an outer side of the housing 11. The conductive portion 22 may pass through the avoidance hole 422 of the first insulating portion 42, the bracket 3, and the via hole 12130 of the terminal 12 in sequence, and the conductive portion 22 is connected to the terminal 12.

A groove is provided on a side of the terminal 12 away from the active material coating portion 21, and the via hole 12130 extends through a bottom wall of the groove. The battery cell 10 may further include a groove cover 7. The groove cover 7 is arranged on the terminal 12 and covers an opening of the groove.

In the technical solution, the groove cover 7 covering the groove is arranged, so that the terminal 12 may be indirectly electrically connected to a bus component through the groove cover 7. A position and a structure of the groove cover 7 may be arranged, so that an electrical connection between the groove cover 7 and the bus component is more convenient and an electrical connection area is larger.

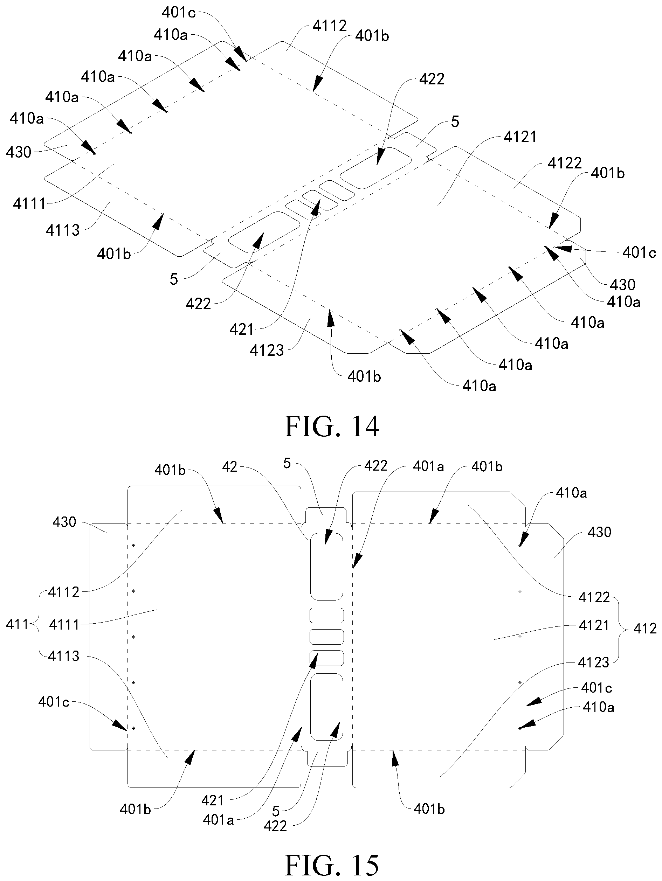

Referring to FIG. 5 to FIG. 7 again, and further referring to FIG. 14 and FIG. 15, FIG. 14 is a schematic structural diagram of an electrode assembly 2 of a battery 100, an insulating member 4, and a protection member 5 according to some embodiments of the present application. FIG. 15 is a top view of a structure shown in FIG. 14. The main insulating portion 41 includes a plurality of main body portions 410. The plurality of main body portions 410 are sequentially connected end to end to form a ring shape. The plurality of main body portions 410 jointly wrap around the circumferential side of the active material coating portion 21 and any two adjacent main body portions 410 are connected. The first insulating portion 42 and the second insulating portion 43 are respectively located on two axial ends of a ring structure formed by the plurality of main body portions 410.

Specifically, there may be two, three, or more main body portions 410. A specific quantity may be selected according to a shape of the active material coating portion 21. For example, a quantity of main body portions 410 and a quantity of surfaces on the circumferential side of the active material coating portion 21 may be set in one-to-one correspondence, that is, the plurality of main body portions 410 cover the plurality of surfaces on the circumferential side of the active material coating portion in one-to-one correspondence. For another example, a quantity of main body portions 410 may be less than a quantity of surfaces on the circumferential side of the active material coating portion 21. In other words, when the insulating member 4 is in an unfolded state, a surface area of at least one main body portion 410 is greater than a surface area of one surface on the circumferential side of the active material coating portion 21. In this way, two or more surfaces on the circumferential side of the active material coating portion 21 can be covered by using the main body portion 410. For another example, a quantity of main body portions 410 may be greater than a quantity of surfaces on the circumferential side of the active material coating portion 21. In this way, at least some of the plurality of main body portions 410 may overlap.

After being connected, the plurality of main body portions 410 are in a ring shape, and may completely wrap the circumferential side of the active material coating portion 21, so that the circumferential side of the active material coating portion 21 is completely isolated from an inner wall of the housing 11. The first insulating portion 42 and the second insulating portion 43 wrap two axial ends of the active material coating portion 21, so that the two axial ends of the active material coating portion are completely isolated from two axial ends of the housing 11, to reduce a risk of exposure of the active material coating portion 21, and improve reliability and stability of the battery cell 10.

Any two adjacent main body portions 410 are connected through a first tape (not shown in the figure), and a hot-melting connection manner is replaced with a connection manner of the first tape. Therefore, a hot fuse may be reduced, and material costs are reduced. In addition, a structure such as a hot-melting connection device is not needed, connection steps can be simplified, and production costs are further reduced.

In an optional solution, in this embodiment of the present application, connection positions of any two adjacent main body portions 410 partially overlap. In the technical solution, connection positions of the main body portions 410 overlap, facilitating connection of two adjacent main body portions 410, for example, facilitating connection of two adjacent main body portions 410 through a first tape, so that the connection positions are not easily separated or disconnected, to reduce a probability and a risk of an insulation failure at an overlapping position, and improve reliability of the electrode assembly 2, so as to improve stability and reliability of the battery cell 10. In addition, the connection positions of the main body portions 410 overlap, to fully ensure that the entire insulating member 4 can wrap around the circumferential direction of the active material coating portion 21, fully reduce exposure of the active material coating portion 21, and reduce a risk of corrosion of the housing 11, so as to further improve reliability and stability of the electrode assembly 2 and the battery cell 10.

Optionally, the circumferential side of the active material coating portion 21 has a plurality of surfaces. Referring to FIG. 9 again, each main body portion 410 includes a main body surface and two flanges. The two flanges are arranged on two sides of the main body surface. Any two adjacent main body portions 410 are connected through the flanges. A connection structure of each main body surface and every two flanges respectively warps different surfaces on the circumferential side of the active material coating portion 21.

Specifically, the circumferential side of the active material coating portion 21 may have four surfaces, six surfaces, or more surfaces. In an embodiment in which the circumferential side of the active material coating portion 21 has four surfaces, there may be two main body portions 410, main body surfaces of the two main body portions 410 may cover two opposite surfaces of the active material coating portion 21. Flanges at a same side of the two main body portions 410 are connected together, and may cover the other surfaces of the active material coating portion 21.

In an embodiment in which the circumferential side of the active material coating portion 21 has six surfaces, for ease of description, it may be defined that the circumferential side of the active material coating portion 21 has three first surfaces and three second surfaces. The three first surfaces and the three second surfaces are alternately arranged in a circumferential direction of the active material coating portion, that is, one second surface is arranged between two adjacent first surfaces, and one first surface is arranged between two adjacent second surfaces. Correspondingly, there may be three main body portions 410. Main body surfaces of the three main body portions 410 may respectively cover three first surfaces that are spaced away of the active material coating portion 21. Flanges of two adjacent main body portions 410 are connected together, and may cover the second surfaces of the active material coating portion 21.

In the technical solution, a connection between any two adjacent main body portions 410 through flanges can ensure reliability of the connection, to improve reliability and stability of the electrode assembly 2 and the battery cell 10. In addition, the main body surface and a connection position of every two flanges respectively wrap different surfaces on the circumferential side of the active material coating portion 21, so that each surface on the circumferential side of the active material coating portion 21 can be effectively wrapped, thereby further improving reliability of the electrode assembly 2 and improving stability and reliability of the battery cell 10.

Referring to FIG. 5, FIG. 14, and FIG. 15 again, the circumferential side of the active material coating portion 21 has four surfaces, that is, a shape of an outer contour of a cross section of the active material coating portion 21 is a quadrilateral.

The main insulating portion 41 includes two main body portions 410. The two main body portions 410 are arranged on two sides of the first insulating portion 42, and the two main body portions 410 are respectively a first main body portion 411 and a second main body portion 412. The first main body portion 411 includes a first main body surface 4111, a first flange 4112, and a second flange 4113. The first flange 4112 and the second flange 4113 are arranged on two sides of the first main body surface 4111. The second main body portion 412 includes a second main body surface 4121, a third flange 4122, and a fourth flange 4123. The third flange 4122 and the fourth flange 4123 are arranged on two sides of the second main body surface 4121. The first flange 4112 is connected to the third flange 4122. The second flange 4113 is connected to the fourth flange 4123.

A connection structure of the first main body surface 4111, the first flange 4112, and the third flange 4122 and a connection structure of the second main body surface 4121, the second flange 4113, and the fourth flange 4123 respectively wrap the four surfaces sequentially arranged on the circumferential side of the active material coating portion 21.

In this embodiment of the present application, the circumferential side of the active material coating portion 21 has four surfaces, which are respectively two opposite large surfaces and two opposite small surfaces. The first main body surface 4111 and the second main body surface 4121 respectively wrap the two opposite large surfaces on the circumferential side of the active material coating portion 21. The first flange 4112 and the third flange 4122 are connected and wrap one small surface on the circumferential side of the active material coating portion 21. The second flange 4113 and the fourth flange 4123 are connected and wrap the other small surface on the circumferential side of the active material coating portion 21. The first insulating portion 42 wraps an end portion of the active material coating portion 21 away from the opening 1110. The second insulating portion 43 wraps an end portion of the active material coating portion 21 close to the opening 1110.

When the circumferential side of the active material coating portion 21 has four surfaces, the battery cell 10 is substantially in a square shape. In this case, the first main body portion 411 and the second main body portion 412 and the connection structure thereof may completely wrap the four surfaces on the circumferential side of the active material coating portion 21, so that the four surfaces on the circumferential side of the active material coating portion 21 are completely isolated from the inner wall of the housing 11, thereby reducing a risk of exposure of the active material coating portion 21, and fully improving reliability and stability of the square battery cell 10.

In some embodiments, the first flange 4112 and the third flange 4122 partially overlap, the first flange 4112 and the third flange 4122 are connected through a first tape, a middle portion of the first tape is adhered to outer sides of the first flange 4112 and the third flange 4122, and two ends of the first tape are adhered to outer sides of the first main body surface 4111 and the second main body surface 4121. The second flange 4113 and the fourth flange 4123 partially overlap, and the second flange 4113 and the fourth flange 4123 are connected through a first tape. A middle portion of the first tape is adhered to outer sides of the second flange 4113 and the fourth flange 4123, and two ends of the first tape are adhered to outer sides of the first main body surface 4111 and the second main body surface 4121.

In the technical solution, the first main body surface 4111, the second main body surface 4121, the first flange 4112, and the third flange 4122 may be connected together through one first tape, and the first main body surface 4111, the second main body surface 4121, the second flange 4113, and the fourth flange 4123 may be connected together through the other first tape. The first main body portion 411 and the second main body portion 412 can be shaped, so that the first main body portion 411 and the second main body portion 412 can be kept in a folded state in which the first main body portion 411 and the second main body portion 412 are attached to the circumferential side of the active material coating portion 21. In addition, connection areas between the first tape and the first main body portion 411 and the second main body portion 412 are increased, so that connection reliability between the first main body portion 411 and the second main body portion 412 is improved, and it can be fully ensured that the first main body portion 411 and the second main body portion 412 can wrap around the circumferential direction of the active material coating portion 21, to reduce exposure of the active material coating portion 21 and reduce a risk of corrosion of the housing 11, so as to further improve reliability and stability of the electrode assembly 2 and the battery cell 10.

Referring to FIG. 14 and FIG. 15 again, the second insulating portion 43 includes a plurality of insulating parts 430. The plurality of insulating parts 430 are connected to the main body surfaces of the plurality of main body portions 410 in one-to-one correspondence, and any two adjacent insulating parts 430 are connected.

Specifically, when the insulating member 4 completely wraps the electrode assembly 2, the plurality of insulating parts 430 of the second insulating portion 43 are located on a wall of the active material coating portion 21 away from the conductive portion 22, to effectively reduce a phenomenon of corrosion of the housing 11 caused by exposure of the active material coating portion 21.

In the process of mounting the electrode assembly 2 into the housing 11, the first insulating portion 42 first enters the housing 11, and the second insulating portion 43 finally enters the housing 11. In this process, the insulating member 4 may enter the housing 11 in a housing entering direction, and the housing 11 does not scratch an edge of the insulating member 4, to reduce movement and slippage of the insulating member 4.

In some embodiments, any two adjacent insulating parts 430 are connected through a second tape (not shown in the figure), and a hot-melting connection manner is replaced with a connection manner of the second tape. Therefore, a hot fuse may be reduced, and material costs are reduced. In addition, a structure such as a hot-melting connection device is not needed, connection steps can be simplified, and production costs are further reduced.

One part of the second tape is adhered to outer sides of two adjacent insulating parts 430, and the other part of the second tape is adhered to outer sides of two adjacent flanges.

In the technical solution, two adjacent insulating parts 430 and two adjacent flanges may be connected together through the second tape. Two adjacent main body portions 410 and the second insulating portion 43 may be shaped, so that the two main body portions 410 and the second insulating portion 43 can be better kept in an unfolded state in which the two main body portions 410 and the second insulating portion 43 are attached to the active material coating portion 21. In addition, connection areas between the second tape and two adjacent main body portions 410 and the second insulating portion 43 are increased, so that it can be fully ensured that the two adjacent main body portions 410 and the second insulating portion 43 can wrap the active material coating portion 21, to fully reduce exposure of the active material coating portion 21, and reduce the risk of corrosion of the housing 11, so as to further improve reliability and stability of the electrode assembly 2 and the battery cell 10.

In some embodiments, any two adjacent insulating parts 430 partially overlap, making it difficult for the two adjacent insulating parts 430 to separate. This reduces a probability and risk of an insulation failure at the overlapping position, fully reduces exposure of the active material coating portion 21, reduces a risk of corrosion of the housing 11, and improves reliability of the electrode assembly 2, thereby improving stability and reliability of the battery cell 10.

In an optional solution, widths of two adjacent insulating parts 430 are unequal, and an insulating part 430 having a smaller width is located on an outer side of an insulating part 430 having a larger width.

In this way, the second tape may be connected to two adjacent insulating parts 430 of the second insulating portion 43, so that connection positions of the two adjacent insulating parts 430 are not easily separated or disconnected, to reduce a probability and a risk of an insulation failure at an overlapping position, and improve reliability of the electrode assembly 2, so as to improve stability and the reliability of the battery cell 10.

Optionally, in two adjacent insulating parts 430, a chamfer structure is formed at two ends of an insulating part 430 located on an outer side, so that more areas of an insulating part 430 located on an inner side can be exposed, and a connection area between the second tape and the insulating part 430 located on the inner side is increased. This can further reduce a probability and a risk of an insulation failure at an overlapping position, and help improve reliability of the electrode assembly 2, to improve stability and reliability of the battery cell 10.

In two adjacent flanges, a chamfer structure is formed on an end that is located at an outer side and that is close to the insulating part 430, that is, the chamfer structure is formed on an end of a flange that is located on the outer side and that is close to the insulating part 430, so that more areas of a flange located on an inner side can be exposed. A connection area between the second tape and the flange located on the inner side is increased, to further reduce a probability and a risk of an insulation failure at an overlapping position, so as to improve reliability of the electrode assembly 2, and improve stability and reliability of the battery cell 10.

Referring to FIG. 14 and FIG. 15 again, there is an indentation 401 at a connection position between a main body surface and a flange of each main body portion 410; and/or there is an indentation 401 at a connection position between an insulating part 430 and a corresponding main body surface.

The indentation 401, used as a boundary structure between two adjacent structures, may be formed by pressing the insulating member 4 by using an indenting machine or another device after the insulating member 4 is manufactured, to thin a thickness of the insulating member 4 at the indentation 401, or may be pre-formed in a process of manufacturing the insulating member 4.

In the technical solution, the indentation 401 is arranged, so that the insulating member 4 can be conveniently folded, to smoothly wrap the active material coating portion 21, and help improve production and manufacturing efficiency and reduce production and manufacturing costs. In addition, in this way, an error in a process in which the insulating member 4 wraps the active material coating portion 21 can be reduced, thereby improving accuracy and reliability of wrapping of the insulating member 4, and further improving stability and reliability of the battery cell 10.

In some embodiments, there is an indentation 401 at a connection position between the main insulating portion 41 and the first insulating portion 42; and/or there is an indentation 401 at a connection position between the main insulating portion 41 and the second insulating portion 43.

In the technical solution, the indentation 401 is arranged, so that the insulating member 4 can be conveniently folded, to smoothly wrap the active material coating portion 21, and help improve production and manufacturing efficiency and reduce production and manufacturing costs. In addition, in this way, an error in a process in which the insulating member 4 wraps the active material coating portion 21 can be reduced, thereby improving accuracy and reliability of wrapping of the insulating member 4, and further improving stability and reliability of the battery cell 10.

Referring to FIG. 14 and FIG. 15 again, in this embodiment, the indentation 401 includes a first indentation 401a, a second indentation 401b, and a third indentation 401c. The first indentation 401a is a connection position between a main body surface of each main body portion 410 of the main insulating portion 41 and the first insulating portion 42, the second indentation 401b is a connection position between each main body portion 410 of the main insulating portion 41 and a flange, and the third indentation 401c is a connection position between a main body surface of each main body portion 410 of the main insulating portion 41 and an insulating part 430 of the second insulating portion 43.

An example in which a shape of the electrode assembly 2 is substantially a rectangle is used for description. In the figure, an X direction is a length direction of the electrode assembly 2, a Y direction is a thickness direction of the electrode assembly 2, and a Z direction is a height direction of the electrode assembly 2. The circumferential side of the active material coating portion 21 has four surfaces, which are respectively two opposite large surfaces and two opposite small surfaces.

When the electrode assembly 2 is wrapped by using the insulating member 4, first, the first insulating portion 42 of the insulating member 4 may cover an end of the active material coating portion 21 arranged at the conductive portion 22, then the first main body portion 411 and the second main body portion 412 of the insulating member 4 are separately bent according to the first indentation 401a, so that the first main body surface 4111 of the first main body portion 411 and the second main body surface 4121 of the second main body portion 412 respectively cover the two opposite large surfaces of the active material coating portion 21, and then the first flange 4112, the second flange 4113, the third flange 4122, and the fourth flange 4123 are separately bent according to the second indentation 401b. An end of the first flange 4112 of the first main body portion 411 close to the first insulating portion 42 and an end of the third flange 4122 of the second main body portion 412 close to the first insulating portion 42 are connected through one first tape, so that the first flange 4112 and the third flange 4122 cover one small surface on the circumferential side of the active material coating portion 21. An end of the second flange 4113 of the first main body portion 411 close to the first insulating portion 42 and an end of the fourth flange 4123 of the second main body portion 412 close to the first insulating portion 42 are connected through another first tape, so that the second flange 4113 and the fourth flange 4123 cover the other small surface on the circumferential side of the active material coating portion 21. Then, two insulating parts 430 of the second insulating portion 43 are separately bent according to the third indentation 401c. Ends of the first flange 4112 and the third flange 4122 close to the second insulating portion 43 are connected to the two insulating parts 430 through one second tape, and ends of the second flange 4113 and the fourth flange 4123 close to the second insulating portion 43 are connected to the two insulating parts 430 through another second tape. The entire insulating member 4 is separately bent for a plurality of times according to the indentation 401, to wrap the active material coating portion 21.

Referring to FIG. 4 to FIG. 9 again, a through hole 314 exposing the first terminal 121 is provided on the bracket 3. The through hole 314 is opposite to the avoidance hole 422, an accommodation portion in communication with the through hole 314 is provided on the terminal 12, and at least a part of the conductive portion 22 passes through the avoidance hole 422 and the through hole 314 and then extends into the accommodation portion and is connected to the terminal 12. In other words, the terminal 12 is configured as a hollow structure.

The at least a part means that the conductive portion 22 may be completely accommodated in the accommodating portion, or a part of the conductive portion 22 may be accommodated in the accommodating portion. Because the accommodating portion is arranged on the terminal 12, a hollow structure of the accommodating portion can reduce a weight of the terminal 12 to a certain extent, to improve gravimetric energy density of the battery cell 10 and the battery 100. In addition, the conductive portion 22 can be accommodated in the accommodating portion, to improve assembly efficiency of the conductive portion 22, further reduce a space occupied by the conductive portion 22, and fully use a space of the battery cell 10, so that both matching between the bracket 3 and the terminal 12 and matching between the bracket 3 and the conductive portion 22 are tighter and more reliable, and a structure of the battery cell 10 is more compact, thereby helping improve energy density of the battery cell 10.

More specifically, a part or a whole of the conductive portion 22 is accommodated in the accommodating portion, so that the part of the conductive portion 22 located in the accommodating portion may occupy a space in the terminal 12, and a space in the housing 11 occupied by the conductive portion 22 can be reduced. When a size of the housing 11 is fixed, a space in the housing 11 can be saved, to accommodate the active material coating portion 21 with a larger size and improve volumetric energy density of the battery cell 10. For example, when the conductive portion 22 is led out from a side of the active material coating portion 21 close to the terminal 12, a space occupied by the conductive portion 22 between the active material coating portion 21 and the terminal 12 can be saved, and a size of the active material coating portion 21 in a lead-out direction of the conductive portion 22 can be increased, thereby reducing a distance between the active material coating portion 21 and the terminal 12 and improving the energy density of the battery cell 10.

In addition, at least a part of the conductive portion 22 is accommodated in the accommodating portion, so that a space occupied by the battery cell 10 can be reduced, and a larger quantity of battery cells 10 can be accommodated by the battery 100 having a same volume, thereby improving the volumetric energy density of the battery 100. In addition, at least a part of the conductive portion 22 is accommodated in the accommodating portion to occupy the space in the terminal 12, so as to reduce redundancy of the conductive portion 22 in the housing 11 to at least a certain extent, reduce a probability of a short circuit between the conductive portion 22 and the active material coating portion 21, reduce a probability of a short circuit of the battery cell 10, and improve operation reliability and stability of the battery cell 10 and the battery 100.

It should be noted that in this embodiment of the present application, the accommodating portion may be located on a side of the terminal 12 facing the active material coating portion 21, or may be located on a side of the terminal 12 facing away from the active material coating portion 21.

Referring to FIG. 9 again, the housing body 111 is provided with a first mounting hole 113, an upper plastic 117, and a lower plastic 118. The terminal 12 is arranged in the first mounting hole 113. The upper plastic 117 is arranged around the first mounting hole 113 and is at least partially located outside the housing body 111. The upper plastic 117 is sleeved on an outer side of the terminal 12 and is at least partially located between a hole wall of the first mounting hole 113 and the terminal 12. The lower plastic 118 is arranged around the first mounting hole 113 and is at least partially located inside the housing body 111. The lower plastic 118 is sleeved on the outer side of the terminal 12 and is at least partially located between the hole wall of the first mounting hole 113 and the terminal 12, thereby improving sealing between the terminal 12 and the housing body 11.

Referring to FIG. 3, FIG. 4, and FIG. 7 again, there are a plurality of terminals 12, and at least one terminal is the first terminal 121. The conductive battery cell 10 further includes the bracket 3. The bracket 3 is arranged in the housing body 111, and the bracket 3 is located between the first terminal 121 and the active material coating portion 21. The bracket 3 has the through hole 314, and a first conductive portion 221 may be exposed through the through hole 314, so as to facilitate connection between the first conductive portion 221 and the first terminal 121.

In an optional solution, the terminal 12 includes two first terminals 121 having opposite polarities. Two through holes 314 are provided on the bracket 3. In the process of mounting the electrode assembly 2 into the housing 11, two conductive portions 22 of the electrode assembly 2 may simultaneously and respectively pass through the two through holes 314 on the bracket 3 in one-to-one correspondence, so that the two conductive portions 22 are respectively connected to corresponding first terminals 121, thereby improving assembling efficiency of the battery cell 10.

Referring to FIG. 5, FIG. 14, and FIG. 15 again, the battery cell 10 further includes a protection member 5. The protection member 5 is arranged at least one side of a circumferential side of the first insulating portion 42 and is superimposed on an outer side of the main insulating portion 41.

Before the electrode assembly 2 wrapped with the insulating member 4 is mounted into the housing 11, the protection member 5 may be obliquely arranged relative to the insulating member 4. In the process of mounting the electrode assembly 2 into the housing 11, the first insulating portion 42 first enters the housing 11 compared with another structure of the insulating member 4, and the protection member 5 may enter the housing 11 in a housing entering direction, to guide and protect the insulating member 4, reduce scratching of the insulating member 4 by the housing 11, and reduce movement and slippage of the insulating member 4. After the electrode assembly 2 is mounted into the housing 11, the protection member 5 is located between the housing 11 and the main insulating portion 41 of the insulating member 4, to further reduce a phenomenon that the active material coating portion 21 corrodes the housing 11 due to exposure.

In the technical solution, the protection member 5 is arranged on at least one side of the circumferential side of the first insulating portion 42. The protection member 5 can play a guide role in the process of mounting the electrode assembly 2 into the housing 11, to facilitate mounting the electrode assembly 2 into the housing 11, and can also protect the insulating member 4, to reduce a probability that the housing 11 scratches the insulating member 4, and reduce movement and slippage of the insulating member 4. In addition, after the electrode assembly 2 is mounted into the housing 11, the protection member 5 is located between a part of the insulating member 4 and the housing 11, so that the active material coating portion 21 can be further isolated from the housing 11, and the protection member 5 may cooperate with the insulating member 4 to implement double insulation, to fully reduce exposure of the active material coating portion 21, and reduce a risk of corrosion of the housing 11, so as to further improve reliability and stability of the electrode assembly 2 and the battery cell 10.

There is one protection member 5. Alternatively, there are a plurality of protection members 5. The plurality of protection members 5 are arranged along a circumferential direction of the first insulating portion 42. For example, there may be two protection members 5, and the two protection members 5 are arranged on two opposite sides of the first insulating portion 42. For another example, there may be three protection members 5, and the three protection members 5 are arranged on the circumferential side of the first insulating portion 42.

In the technical solution, the plurality of protection members 5 are arranged, to guide mounting of the electrode assembly 2 into the housing in a circumferential direction of the electrode assembly 2 and protect the insulating member 4, thereby further improving reliability and stability of the electrode assembly 2 and the battery cell 10.

According to some embodiments of the present application, the present application further provides a battery 100, including the battery cell 10 according to any one of the foregoing solutions. In the technical solution of the embodiments of the present application, the foregoing battery cell 10 is used, so that reliability and stability of the battery 100 can be improved.

According to some embodiments of the present application, the present application further provides a power consuming apparatus 1000, including the battery 100 according to the foregoing solution. The battery 100 is configured to provide electric energy for the power consuming apparatus 1000. The power consuming apparatus 1000 may be any one of the foregoing devices or systems in which the battery 100 is used.

In the technical solution of the embodiments of the present application, the foregoing battery cell 10 or battery 100 is used, so that reliability and stability of the power consuming apparatus 1000 can be improved.

Finally, it should be noted that the foregoing embodiments are merely used for describing the technical solutions of the present application, but are not intended to limit the present application. Although the present application is described in detail with reference to the foregoing embodiments, a person of ordinary skill in the art should understand that, modifications may still be made to the technical solutions in the foregoing embodiments, or equivalent replacements may be made to some or all of the technical features; These modifications or substitutions do not depart the essence of the corresponding technical solution from the scope of the technical solution of each embodiment of the present application, and should be covered in the scope of the claims and descriptions of the present application. In particular, as long as there is no structural conflict, each technical feature mentioned in each embodiment can be combined in any manner. The present application is not limited to the specific embodiments disclosed herein, but includes all technical solutions falling within the scope of the claims.

## Claims

1. A battery cell, comprising:
a housing, comprising a housing cover and a housing body having an opening, wherein the housing cover covers the opening, and a terminal is arranged on the housing;
an electrode assembly, comprising a conductive portion and an active material coating portion arranged in the housing, wherein the conductive portion is electrically connected to the active material coating portion and the terminal;
a bracket, arranged at an end of the active material coating portion away from the housing cover in the housing body; and
an insulating member, comprising a main insulating portion, a first insulating portion, and a second insulating portion, wherein the main insulating portion is arranged on a circumferential side of the active material coating portion, the first insulating portion is arranged between the bracket and the end of the active material coating portion away from the housing cover, and the second insulating portion is arranged at an end of the active material coating portion close to the housing cover.

2. The battery cell according to claim 1, wherein a plurality of liquid passage holes that are provided at intervals are provided at a position of the main insulating portion close to the second insulating portion.

3. The battery cell according to claim 2, wherein the plurality of liquid passage holes are provided at intervals in a length direction of the main insulating portion.

4. The battery cell according to claim 2, wherein a distance between the liquid passage hole and the second insulating portion ranges from 1 mm to 8 mm.

5. The battery cell according to claim 4, wherein the distance between the liquid passage hole and the second insulating portion ranges from 3 mm to 5 mm.

6. The battery cell according to claim 2, wherein a diameter of the liquid passage hole ranges from 0.5 mm to 1 mm.

7. The battery cell according to claim 2, wherein the main insulating portion comprises a plurality of main body portions; and the plurality of main body portions are sequentially connected end to end to form a ring shape, the plurality of main body portions jointly wrap around the circumferential side of the active material coating portion and any two adjacent main body portions are connected, and the liquid passage holes are provided on the main body portions and a quantity of liquid passage holes on each main body portion is greater than or equal to 3.

8. The battery cell according to any one of claims 1 to 7, wherein an explosion-proof valve is arranged on the housing, and the insulating member has an air vent corresponding to a position of the explosion-proof valve.

9. The battery cell according to claim 8, wherein the explosion-proof valve is located on a wall of the housing body opposite to the bracket, the air vent is provided on the first insulating portion, and the bracket has an exhaust hole corresponding to the position of the explosion-proof valve.

10. The battery cell according to claim 9, wherein there is one air vent; or there are a plurality of air vents, and the plurality of air vents are provided at intervals in a length direction of the first insulating portion.

11. The battery cell according to claim 9, wherein there is one exhaust hole; or there are a plurality of exhaust holes, and the plurality of exhaust holes are provided at intervals in a length direction and/or a width direction of the bracket.

12. The battery cell according to claim 9, wherein the bracket comprises:
a bracket body, wherein the bracket body has a first side and a second side that are arranged opposite to each other in a thickness direction of the bracket body, and the exhaust hole extends through the first side and the second side; and
a first abutting portion, arranged on the first side and protruding in a direction away from the second side, and configured to abut against the end of the active material coating portion away from the housing cover, so that the exhaust hole and the active material coating portion jointly form a first exhaust channel.

13. The battery cell according to claim 12, wherein a gas passage gap that extends through the first side and the second side is provided in a circumferential direction of the bracket, the gas passage gap and the housing jointly form a gas passage channel, and the gas passage channel is in communication with the first exhaust channel.

14. The battery cell according to claim 13, wherein a plurality of gas passage gaps that are provided at intervals are provided in the circumferential direction of the bracket, each gas passage gap and the housing jointly form one gas passage channel, and a plurality of gas passage channels are provided around a circumferential direction of the first exhaust channel.

15. The battery cell according to claim 13, wherein a first extending portion further protrudes on the first side of the bracket body, the first extending portion is arranged around the circumferential direction of the bracket body and defines a matching slot with the bracket body, and the end of the active material coating portion away from the housing cover is arranged in the matching slot.

16. The battery cell according to claim 15, wherein the gas passage gap extends through the first extending portion and the bracket body.

17. The battery cell according to claim 15, wherein the first extending portion and the first abutting portion are spaced away, and jointly form a first flow guide channel, and the first flow guide channel is in communication with at least one gas passage channel and the first exhaust channel.

18. The battery cell according to any one of claims 13 to 17, wherein a second abutting portion protruding in a direction away from the first side is arranged on the second side of the bracket body, the second abutting portion is configured to abut against the wall of the housing on which the explosion-proof valve is arranged, and the second abutting portion and the wall jointly form a second exhaust channel; and the second exhaust channel is in communication with at least one gas passage channel.

19. The battery cell according to claim 18, wherein a second extending portion further protrudes on the second side of the bracket body, the second extending portion and the second abutting portion are spaced away, and jointly form a second flow guide channel, and the second flow guide channel is in communication with at least one gas passage channel and the second exhaust channel.

20. The battery cell according to claim 19, wherein in a length direction of the battery cell, there are a plurality of gas passage gaps on both sides of the exhaust hole, and a plurality of gas passage gaps located on a same side of the exhaust hole share one second flow guide channel.

21. The battery cell according to any one of claims 1 to 20, wherein the terminal comprises a first terminal, the first terminal is arranged on a wall of the housing body opposite to the housing cover, an avoidance hole is provided on the first insulating portion, and the avoidance hole is for the conductive portion to pass through, so that the conductive portion is capable of being connected to the first terminal.

22. The battery cell according to claim 21, wherein the terminal comprises two first terminals having opposite polarities, and two avoidance holes are provided on the first insulating portion.

23. The battery cell according to claim 21, wherein the main insulating portion comprises a plurality of main body portions; and the plurality of main body portions are sequentially connected end to end to form a ring shape, the plurality of main body portions jointly wrap around the circumferential side of the active material coating portion and any two adjacent main body portions are connected, and the first insulating portion and the second insulating portion are respectively located on two axial ends of a ring structure formed by the plurality of main body portions.

24. The battery cell according to claim 23, wherein connection positions of any two adjacent main body portions partially overlap.

25. The battery cell according to claim 23, wherein the circumferential side of the active material coating portion has a plurality of surfaces; and
each main body portion comprises a main body surface and two flanges arranged on two sides of the main body surface, any two adjacent main body portions are connected through the flanges, and a connection structure of each main body surface and every two flanges respectively warps different surfaces on the circumferential side of the active material coating portion.

26. The battery cell according to claim 25, wherein the circumferential side of the active material coating portion has four surfaces;
the main insulating portion comprises two main body portions arranged on two sides of the first insulating portion, the two main body portions are respectively a first main body portion and a second main body portion, the first main body portion comprises a first main body surface, and a first flange and a second flange that are arranged on two sides of the first main body surface, the second main body portion comprises a second main body surface, and a third flange and a fourth flange that are arranged on two sides of the second main body surface, the first flange is connected to the third flange, and the second flange is connected to the fourth flange; and
a connection structure of the first main body surface, the first flange, and the third flange and a connection structure of the second main body surface, the second flange, and the fourth flange respectively wrap the four surfaces sequentially arranged on the circumferential side of the active material coating portion.

27. The battery cell according to claim 25, wherein the second insulating portion comprises a plurality of insulating parts, the plurality of insulating parts are connected to the main body surfaces of the plurality of main body portions in one-to-one correspondence, and any two adjacent insulating parts are connected.

28. The battery cell according to claim 27, wherein any two adjacent insulating parts partially overlap.

29. The battery cell according to any one of claims 21 to 28, wherein a through hole exposing the first terminal is provided on the bracket, the through hole is opposite to the avoidance hole, an accommodation portion in communication with the through hole is provided on the terminal, and at least a part of the conductive portion passes through the avoidance hole and the through hole and then extends into the accommodation portion and is connected to the terminal.

30. The battery cell according to any one of claims 1 to 29, further comprising:
a protection member, arranged on at least one side of a circumferential side of the first insulating portion and superimposed on an outer side of the main insulating portion.

31. A battery, comprising the battery cell according to any one of claims 1 to 30.

32. A power consuming apparatus, comprising the battery according to claim 31.
